(19) Europäisches Patentamt
European Patent Office
Office européen des brevets

(11) EP 2 060 977 A1

(12) **EUROPEAN PATENT APPLICATION**

(43) Date of publication:
20.05.2009 Bulletin 2009/21

(51) Int Cl.:
*G06F 11/34* *(2006.01)*

(21) Application number: 08011725.2

(22) Date of filing: 27.06.2008

(84) Designated Contracting States:
**AT BE BG CY CZ DE DK EE ES FI FR GB GR HR HU IE IS IT LT LU LV MC MT NL NO PL PT RO SE SI SK TR**
Designated Extension States:
**AL BA MK RS**

(30) Priority: **19.11.2007 JP 2007299475**

(71) Applicant: **MITSUBISHI ELECTRIC CORPORATION**
**Chiyoda-ku**
**Tokyo 100-8310 (JP)**

(72) Inventor: **Kaneki, Yusuke**
**Chiyoda-ku**
**Tokyo 100-8310 (JP)**

(74) Representative: **Pfenning, Meinig & Partner GbR**
**Patent- und Rechtsanwälte**
**Theresienhöhe 13**
**80339 München (DE)**

(54) **Virtual machine server sizing apparatus, virtual machine server sizing method, and virtual machine server sizing program**

(57) It is an object to improve accuracy of estimation of CPU load by calculating the CPU load necessary for performing I/O emulation under the virtualized environment based on disk load and/or network load. In case of estimating CPU load of a server X which operates servers 10 to 12 as virtual servers, a CPU performance converting unit 223 obtains measured values of CPU load of the servers 10 to 12. A load converting unit 220 obtains an estimated value of the CPU load of the server X caused by I/Os of disks and/or network from disk load and/or network load of the servers 10 to 12. A CPU overhead calculating unit 224 obtains a coefficient showing CPU overhead caused by virtualization. A load estimating unit 225 estimates the CPU load of the server X using the above measured value, the above estimated value, and the above coefficient.

Fig. 1

**Description**

BACKGROUND OF THE INVENTION

FIELD OF THE INVENTION

The present invention relates to a virtual machine server sizing apparatus, a virtual machine server sizing method, and a virtual machine server sizing program.

LIST OF REFERENCES

[Patent Document 1] JP 2005-115653
[Non-Patent Document 1] Y. Ajiro and A. Tanaka, "Measuring Resource Management Overhead for Server Virtualization," Research Report-System Evaluation, Information Processing Society of Japan, June 2006, Vol. 2006, pp. 17-22.

DISCUSSION OF THE BACKGROUND

In recent years, server integration to consolidate hundreds of servers in corporation into less number of high performance servers has drawn attention. It is an object to consolidate systems operated on multiple servers into one server using virtualization technique and to reduce operation and maintenance cost (for example, refer to Patent Document 1 and Non-Patent Document 1).
In order to integrate servers using server virtualization technique, it is important to determine necessary performance for one or more integrating servers and the necessary number of the integrating servers and calculate a combination of virtual machines and physical servers. Because of this, it is important to do sizing, that is, to obtain statistical information of system load from the servers to be integrated and based on the information, estimate system load after virtualization.
In a conventional sizing method under unvirtualized environment, for example, for estimating the system load in case of operating multiple applications on one server, it is possible to estimate the system load of the whole server by adding up the system loads used by respective applications. However, under virtualized environment, there are loads caused by the virtualization such as overhead caused by competition or scheduling of multiple servers operated on one physical machine, overhead caused by I/O (Input/Output) emulation generated at the time of accessing disks or network, etc. Therefore, in order to do sizing, it is necessary to perform calculation with considering the overhead caused by the virtualization instead of performing a simple addition of the loads.
In Patent Document 1, a method has been devised to measure system load from multiple virtual machines which are being executed under virtualized environment and to calculate a combination of the virtual machines so as to maximize the performance. However, this method cannot calculate the system load after the virtualization from statistical information obtained from servers to be integrated under unvirtualized environment. Further, the method does not consider the overhead caused by the virtualization.
In research disclosed by Non-Patent Document 1, overhead of CPU (Central Processing Unit) resource and disk resource are measured using a benchmark test, relation between the number of virtual machines operated and performance, and performance ratio compared with a case of being unvirtualized are calculated and used for designing or managing performance in server integration. However, the research does not consider overhead, etc. of CPU load caused by I/O emulation.
As discussed above, there is a problem that the conventional sizing method may underestimate the CPU load, because the CPU load (CPU use rate) necessary for performing I/O emulation by the virtualization mechanism is not considered.

SUMMARY OF THE INVENTION

The present invention aims, for example, to improve the accuracy of estimation of CPU load by calculating the CPU load necessary for performing I/O emulation under the virtualized environment based on disk load and/or network load.
According to an aspect of the present invention, a virtual machine server sizing apparatus calculating an estimated value of CPU (Central Processing Unit) load of a virtual machine server generated by running, on the virtual machine server executing a plurality of virtual machines, each of a plurality of virtual servers that virtualize a plurality of real servers in each of the plurality of virtual machines, the virtual machine server sizing apparatus includes: a load managing unit for storing in a memory device a measured value of CPU load of a real server generated on each of the plurality of real servers and a measured value of I/O (Input/Output) load of a disk and/or a network generated on each of the plurality of real servers; a load converting unit for previously storing in the memory device an I/O load conversion rate for obtaining an estimated value of CPU load of the virtual machine server generated by processing I/O by a virtual machine from a measured value of I/O load generated on each of the plurality of real servers, and calculating by a processing device an estimated value of CPU load of the virtual machine server generated on the virtual machine server by processing I/O by each of the plurality of virtual servers from the measured value of the I/O load stored by the load managing unit using the I/O load conversion rate; and a load estimating unit for calculating by the processing device a sum of the measured value of the CPU load of the real server stored by the load managing unit and the estimated value of the CPU load of the virtual machine server calculated by the load converting unit as the estimated value of the CPU load of the virtual machine server generated on the virtual machine server by running each of the plurality of virtual servers.

The virtual machine server sizing apparatus further includes: a CPU performance converting unit for previously storing in the memory device a CPU performance value which quantifies performance of a CPU included in each of the plurality of real servers, and converting by the processing device the measured value of the CPU load of the real server stored by the load managing unit to a value, for which a difference in performance between the CPU included in each of the plurality of real servers and the CPU included in the virtual machine server is considered, using the CPU performance value, and the load estimating unit calculates the sum using the value converted by the CPU performance converting unit instead of the measured value of the CPU load of the real server stored by the load managing unit.

The load converting unit previously stores in the memory device, as the I/O load conversion rate, a rate of a measured value of CPU load of a test server generated on the test server executing a virtual machine using same virtualization technique as the virtual machine server by processing I/O by a corresponding virtual machine and a measured value of corresponding I/O load.

The load converting unit previously stores in the memory device a CPU performance value which quantifies performance of a CPU included in the test server, and converts by the processing device the estimated value of the CPU load of the virtual machine server generated on the virtual machine server by processing I/O by each of the plurality of virtual servers to a value, for which a difference in performance between the CPU included in the test server and the CPU included in the virtual machine server is considered, using the CPU performance value, and the load estimating unit calculates the sum using the value converted by the load converting unit instead of the estimated value of the CPU load of the virtual machine server calculated by the load converting unit.

The load managing unit stores in the memory device, as the measured value of the I/O load generated on each of the plurality of real servers, a number of I/O requests of a disk and/or a network measured at every unit of time in each of the plurality of real servers and I/O band of a disk and/or a network measured at every unit of time in each of the plurality of real servers, and the load converting unit previously stores in the memory device, as the I/O load conversion rate, an I/O number conversion rate obtained by dividing a measured value of CPU load of the test server generated on the test server by issuing an I/O request by the corresponding virtual machine with a corresponding number of I/O requests and a band conversion rate obtained by dividing a measured value of CPU load of the test server generated on the test server by executing the I/O request by the corresponding virtual machine with a corresponding I/O band, and calculates by the processing device, as the estimated value of the CPU load of the virtual machine server generated on the virtual machine server by processing I/O by each of the plurality of virtual servers, a summed value of a multiplied value of the I/O number conversion rate and the number of I/O requests stored by the load managing unit and a multiplied value of the band conversion rate and the I/O band stored by the load managing unit.

The load converting unit previously stores in the memory device, as the I/O load conversion rate, a rate of a measured value of CPU load of a test server generated, on each of a plurality of test servers each of which executes a virtual machine using different virtualization technique, by processing I/O by a corresponding virtual machine and a measured value of corresponding I/O load, and calculates the estimated value of the CPU load of the virtual machine server generated on the virtual machine server by processing I/O by each of the plurality of virtual servers using an I/O load conversion rate corresponding to a test server which uses same virtualization technique as the virtual machine server.

The load managing unit stores in the memory device a measured value of I/O load of a network generated on each of the plurality of real servers, and the load converting unit previously stores in the memory device, as the I/O conversion rate, a rate of a measured value of CPU load of a test server generated, on each of two test servers, one of which executes a virtual machine for carrying out a first communication process communicating with another virtual machine executed by a same physical machine and an other executes a virtual machine for carrying out a second communication process communicating with a different physical machine, by processing I/O of a network by a corresponding virtual machine and a measured value of corresponding I/O load, and calculates the estimated value of the CPU load of the virtual machine server generated on the virtual machine server by processing I/O of a network by each of the plurality of virtual servers using an I/O load conversion rate corresponding to a test server which executes a virtual machine for carrying out a same communication process as the virtual machine server out of the first communication process and the second communication process.

The virtual machine server sizing apparatus further includes: a CPU overhead calculating unit for previously storing in the memory device a rate of a number of virtual machines and a number of CPUs included in the virtual machine server and a CPU overhead coefficient showing overhead of CPU load of the virtual machine server generated on the virtual machine server according to a corresponding rate, and extracting from the memory device a CPU overhead coefficient corresponding to a rate of a number of the plurality of virtual machines and a number of CPUs included in the virtual machine server, and the load estimating unit converts by the processing device the sum to a value, for which the overhead is considered, using the CPU overhead coefficient extracted by the CPU overhead calculating unit.

The CPU overhead calculating unit previously stores in the memory device an item specifying virtualization technique, a rate of a number of virtual machines and a number of CPUs included in the virtual machine server, and a CPU overhead coefficient showing overhead of CPU load of the virtual machine server generated on the virtual machine server according to virtualization technique specified by a corresponding item and a corresponding rate, and extracts from the memory device a CPU overhead coefficient corresponding to virtualization technique used by the virtual machine server and the rate of the number of the plurality of virtual machines and the number of CPUs included in the virtual machine server.

According to another aspect of the present invention, a virtual machine server sizing method calculating an estimated value of CPU (Central Processing Unit) load of a virtual machine server generated by running, on the virtual machine server executing a plurality of virtual machines, each of a plurality of virtual servers that virtualize a plurality of real servers in each of the plurality of virtual machines, the virtual machine server sizing method includes: by a memory device of a computer, storing a measured value of CPU load of a real server generated on each of the plurality of real servers and a measured value of I/O (Input/Output) load of a disk and/or a network generated on each of the plurality of real servers; by the memory device of the computer, previously storing an I/O load conversion rate for obtaining an estimated value of CPU load of the virtual machine server generated by processing I/O by a virtual machine from a measured value of I/O load generated on each of the plurality of real servers, by a processing device of the computer, calculating an estimated value of CPU load of the virtual machine server generated on the virtual machine server by processing I/O by each of the plurality of virtual servers from the measured value of the I/O load stored by the memory device using the I/O load conversion rate; and by the processing device of the computer, calculating a sum of the measured value of the CPU load of the real server stored by the memory device and the estimated value of the CPU load of the virtual machine server calculated by the processing device as the estimated value of the CPU load of the virtual machine server generated on the virtual machine server by running each of the plurality of virtual servers.

According to another aspect of the present invention, a virtual machine server sizing program calculating an estimated value of CPU (Central Processing Unit) load of a virtual machine server generated by running, on the virtual machine server executing a plurality of virtual machines, each of a plurality of virtual servers that virtualize a plurality of real servers in each of the plurality of virtual machines, the virtual machine server sizing program has a computer execute: a load managing procedure for storing in a memory device a measured value of CPU load of a real server generated on each of the plurality of real servers and a measured value of I/O (Input/Output) load of a disk and/or a network generated on each of the plurality of real servers; a load converting procedure for previously storing in the memory device an I/O load conversion rate for obtaining an estimated value of CPU load of the virtual machine server generated by processing I/O by a virtual machine from a measured value of I/O load generated on each of the plurality of real servers, and calculating by a processing device an estimated value of CPU load of the virtual machine server generated on the virtual machine server by processing I/O by each of the plurality of virtual servers from the measured value of the I/O load stored by the load managing procedure using the I/O load conversion rate; and a load estimating procedure for calculating by the processing device a sum of the measured value of the CPU load of the real server stored by the load managing procedure and the estimated value of the CPU load of the virtual machine server calculated by the load converting procedure as the estimated value of the CPU load of the virtual machine server generated on the virtual machine server by running each of the plurality of virtual servers.

In a virtual machine server sizing apparatus pertinent to an aspect of the present invention, by a load managing unit, storing in a memory device a measured value of CPU load of a real server generated on each of the plurality of real servers and a measured value of I/O (Input/Output) load of a disk and/or a network generated on each of the plurality of real servers; by a load converting unit, previously storing in the memory device an I/O load conversion rate for obtaining an estimated value of CPU load of the virtual machine server generated by processing I/O by a virtual machine from a measured value of I/O load generated on each of the plurality of real servers, and calculating by a processing device an estimated value of CPU load of the virtual machine server generated on the virtual machine server by processing I/O by each of the plurality of virtual servers from the measured value of the I/O load stored by the load managing unit using the I/O load conversion rate; and by a load estimating unit, calculating by the processing device a sum of the measured value of the CPU load of the real server stored by the load managing unit and the estimated value of the CPU load of the virtual machine server calculated by the load converting unit as the estimated value of the CPU load of the virtual machine server generated on the virtual machine server by running each of the plurality of virtual servers, and therefore, the accuracy of estimation of CPU load under the virtualized environment is improved.

BRIEF DESCRIPTION OF THE DRAWINGS

A complete appreciation of the present invention and many of the attendant advantages thereof will be readily obtained as the same becomes better understood by reference to the following detailed description when considered in connection with the accompanying drawings, wherein:

Fig. 1 is a block diagram showing a system configuration according to the first embodiment;
Fig. 2 shows a configuration example of a configuration information table according to the first embodiment;
Fig. 3 shows a configuration example of a CPU load table according to the first embodiment;
Fig. 4 shows a configuration example of a disk load table according to the first embodiment;
Fig. 5 shows a configuration example of a network load table according to the first embodiment;
Fig. 6 shows a configuration example of a disk load conversion table according to the first embodiment;
Fig. 7 shows a configuration example of a network load conversion table according to the first embodiment;
Fig. 8 shows a configuration example of a CPU performance information table according to the first embodiment;
Fig. 9 shows a configuration example of a CPU overhead table according to the first embodiment;
Fig. 10 shows an example of hardware resource of a virtual machine server sizing apparatus according to the first embodiment;
Fig. 11 is a flowchart showing a virtual machine server sizing method according to the first embodiment;
Fig. 12 is a flowchart showing a CPU load calculating step according to the first embodiment.
Fig. 13 is a flowchart showing a disk load converting step according to the first embodiment;
Fig. 14 is a flowchart showing a network load converting step according to the first embodiment;
Fig. 15 shows a configuration example of a disk load conversion table according to the third embodiment;
Fig. 16 shows a configuration example of a network load conversion table according to the third embodiment; and
Fig. 17 shows a configuration example of a CPU overhead table according to the third embodiment.

DESCRIPTION OF THE PREFERRED EMBODIMENTS

In the following, embodiments of the present invention will be explained in reference to the figures.

Embodiment 1.

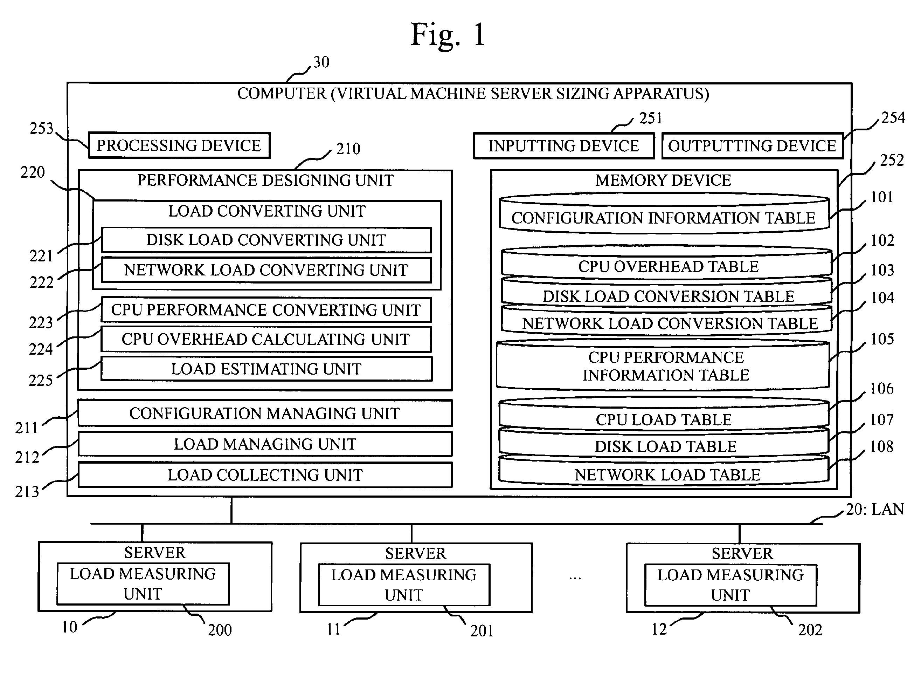

Fig. 1 is a block diagram showing a general configuration of a system according to the present embodiment.
In Fig. 1, servers 10 to 12 are non-virtual servers to be a target of server integration. A computer 30 is a terminal for operating a sizing function. The servers 10 to 12 and the computer 30 are connected via LAN (Local Area Network) 20. Each of the servers 10 to 12 is an example of a real server, and the computer 30 is an example of a virtual machine server sizing apparatus.
The servers 10 to 12 include load measuring units 200 to 202. Further, each of the servers 10 to 12 includes a HDD (Hard Disk Drive) and a NIC (Network Interface Card) as well as at least one CPU (Central Processing Unit) as hardware resource.
The load measuring units 200 to 202 measure system load of the servers 10 to 12, respectively, and output them as measured information. The system load means, for example, CPU load and I/O (Input/Output) load of disk or network. The CPU load means load on a CPU of each server by executing a predetermined process on each server. I/O load of the disk (also called simply as "disk load") means access load on disks at the time of reading data from a disk of a HDD of each server and writing data on the disk. Further, I/O load of the network (also called simply as "network load") means access load on network at the time of receiving data from network such as LAN 20 via a NIC of each server and sending data to the network. In the present embodiment, the load measuring units 200 to 202 of the servers 10 to 12 measure a CPU use rate as the CPU load, the number of disk I/Os and the disk band as the I/O load of the disk, and the number of network I/Os and the network band as the I/O load of the network. The number of disk I/Os means the number of times reading/writing from/on the disk is requested per a unit of time, and the disk band means the amount of data read/written from/on the disk per a unit of time. Similarly, the number of network I/Os means the number of times receiving/sending from/to the network is requested per a unit of time, and the network band means the amount of data received/sent from/to the network per a unit of time.
The computer 30 includes a performance designing unit 210, a configuration managing unit 211, a load managing unit 212, and a load collecting unit 213. Further, the computer 30 includes an inputting device 251 (e.g. a keyboard or a mouse), a memory device 252 (e.g. a HDD or a memory), a processing device 253 (e.g. a CPU), and an outputting device 254 (e.g. a display device or a printer device) as hardware resource. The performance designing unit 210 includes a load converting unit 220 having a disk load converting unit 221 and a network load converting unit 222, a CPU performance converting unit 223, a CPU overhead calculating unit 224, and a load estimating unit 225. The memory device 252 of the computer 30 stores a configuration information table 101, a CPU overhead table 102, a disk load conversion table 103, a network load conversion table 104, a CPU performance information table 105, a CPU load table 106, a disk load table 107, and a network load table 108.

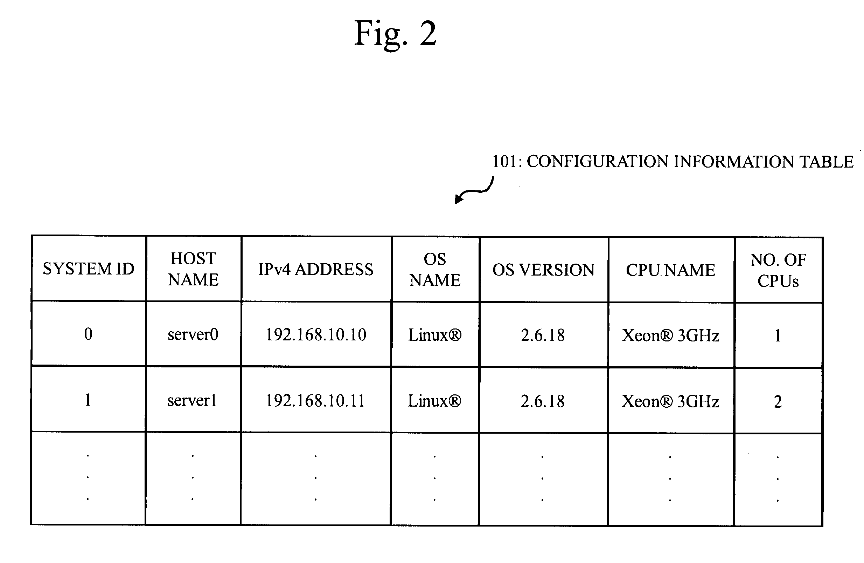

The configuration managing unit 211 accepts inputs of configuration information of the servers 10 to 12 from the inputting device 251, and stores the configuration information in the configuration information table 101 and manages it. Here, a configuration example of the configuration information table 101 is shown in Fig. 2. In Fig. 2, the configuration information table 101 stores the configuration information for each server using a system ID (IDentifier) which identifies the servers 10 to 12 uniquely in the computer 30. The configuration information table 101 stores a host name, an IPv4 (Internet Protocol version 4) address, an OS (operating system) name, an OS version, a CPU name, and the number of CPUs of each server as the configuration information.

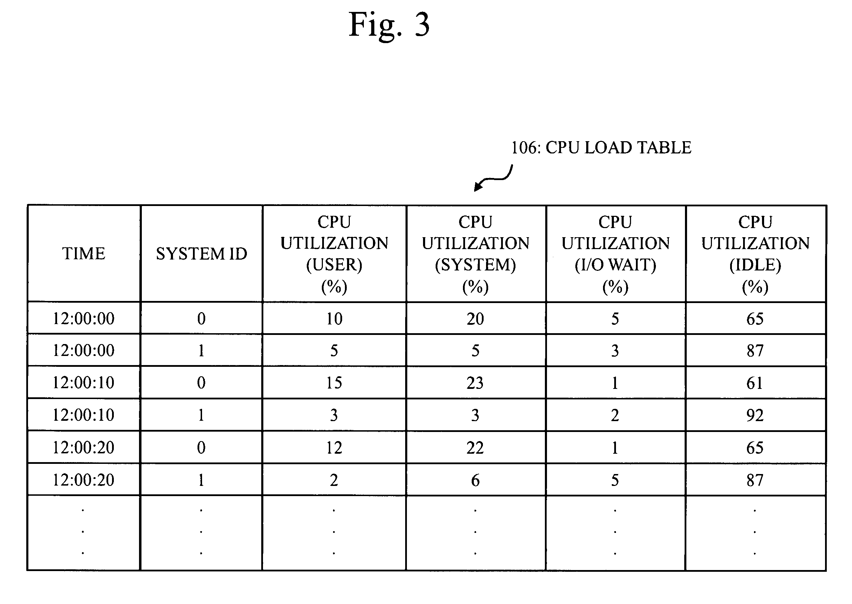

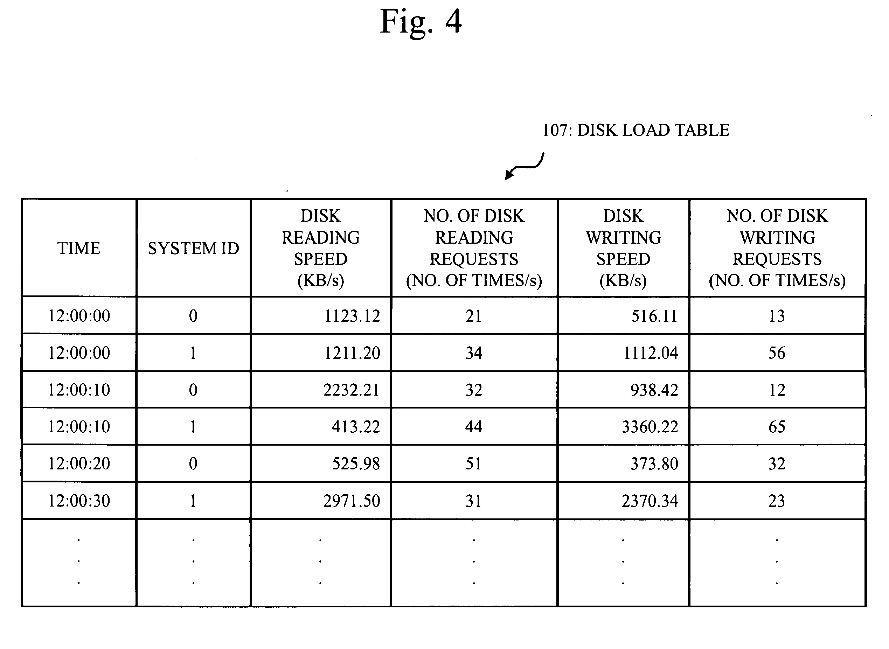

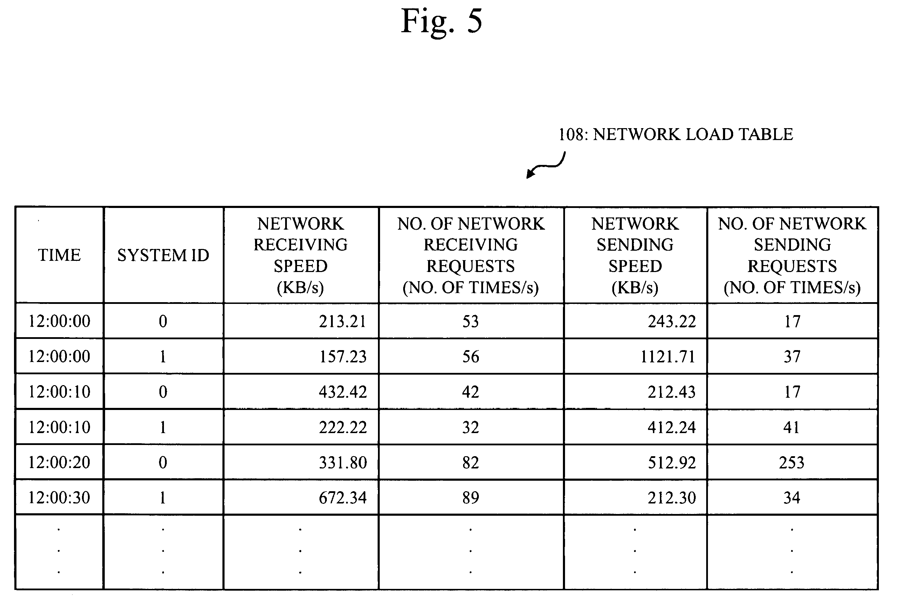

The load collecting unit 213 collects measured information outputted from load measuring units 200 to 202 on the servers 10 to 12 via the LAN 20. The load managing unit 212 stores the measured information collected by the load collecting unit 213 in the CPU load table 106, the disk load table 107, and the network load table 108. Here, configuration examples of the CPU load table 106, the disk load table 107, and the network load table 108 are shown in Figs. 3, 4, and 5, respectively In Figs. 3, 4, and 5, all of the CPU load table 106, the disk load table 107, and the network load table 108 store the measured information at every 10 seconds for each server using the system ID. The CPU load table 106 shown in Fig. 3 stores a user use rate of a CPU included in each server (shown as "CPU utilization (user)" in Fig. 3) (%), a system use rate of the CPU (shown as "CPU utilization (system)" in Fig. 3) (%), a rate of I/O waiting of the CPU (shown as "CPU utilization (I/O wait)" in Fig. 3) (%), and a rate of standby of the CPU (shown as "CPU utilization (idle)" in Fig. 3) (%) as the measured information at every 10 seconds. The CPU use rate can be obtained by adding the user use rate of the CPU, the system use rate of the CPU, and the rate of I/O waiting of the CPU. The CPU use rate can also be obtained by subtracting the rate of standby of the CPU from 100%. The disk load table 107 shown in Fig. 4 stores a reading speed of a disk of a HDD included in each server (kilobytes/second), the number of reading requests of the disk (number of times/second), a writing speed of the disk (kilobytes/second), and the number of writing requests of the disk (number of times/second) as the measured information at every 10 seconds. The number of disk I/Os can be obtained by adding the number of reading requests of the disk and the number of writing requests of the disk. Further, the disk band can be obtained by adding the reading speed of the disk and the writing speed of the disk. The network load table 108 shown in Fig. 5 stores a receiving speed of network via a NIC included in each server (kilobytes/second), the number of receiving requests of the network (number of times/second), a sending speed of the network (kilobytes/second), and the number of sending requests of the network (number of times/second) as the measured information at every 10 seconds. The number of network I/Os can be obtained by adding the number of receiving requests of the network and the number of sending requests of the network. Further, the network band can be obtained by adding the receiving speed of the network and the sending speed of the network.

As discussed above, the load managing unit 212 stores in the memory device 252 the measured value of CPU load generated on each of the servers 10 to 12 (e.g. CPU use rate of the servers 10 to 12) and the measured value of the I/O load of the disk and/or the network generated on each of the servers 10 to 12 (e.g. the number of disk I/Os, the disk band, the number of network I/Os, and the network band of the servers 10 to 12).

More concretely, the load managing unit 212 stores in the memory device 252, as the measured value of the I/O load generated on each of the servers 10 to 12, the number of I/O requests of the disk and/or the network measured at every unit of time (e.g. 10 seconds) in each of the servers 10 to 12 (i.e. the number of disk I/Os and the number of network I/Os of the servers 10 to 12) and the I/O band of the disk and/or the network measured at every unit of time (e.g. 10 seconds) in each of the servers 10 to 12 (i.e. the disk band and the network band of the servers 10 to 12).

The performance designing unit 210 accepts inputs of conditions for estimating the CPU load of a server X (not shown in the figures) which is an integrating server for the servers 10 to 12 from the inputting device 251. Here, the server X divides one physical computer using virtualization technique to operate multiple logical computers (i.e. virtual machines), each having an independent OS. That is, the server X is a server computer executing multiple virtual machines. In case of integrating the servers 10 to 12, the server X runs a virtual server that virtualizes each of the servers 10 to 12 in each of the virtual machines. The server X includes a HDD and a NIC as well as at least one CPU as hardware resource similarly to the servers 10 to 12. The server X is an example of a virtual machine server. The performance designing unit 210 estimates CPU load of the server X generated by running the virtual servers of the servers 10 to 12 on the server X based on the measured information stored by the load managing unit 212 in the CPU load table 106, the disk load table 107, and the network load table 108 and the above conditions.

In the following, functions of each unit of the performance designing unit 210 will be explained.

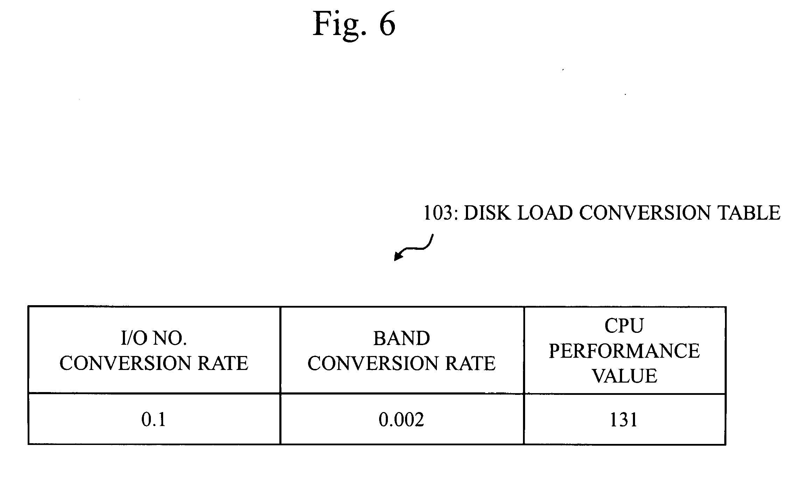

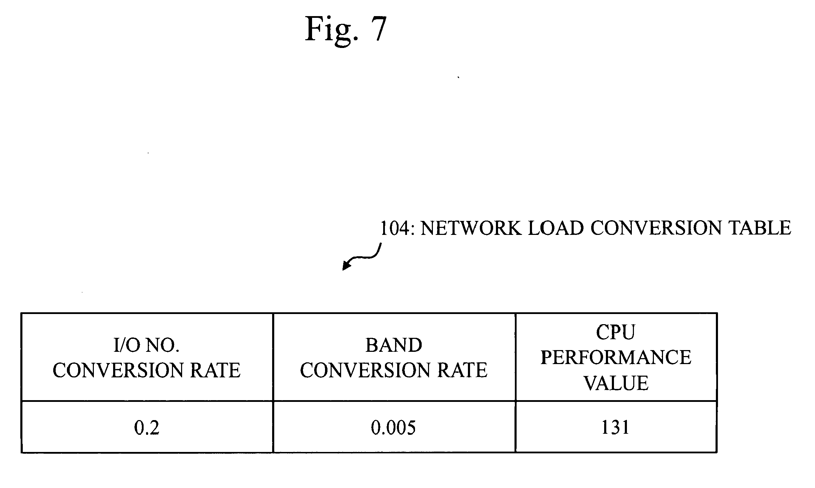

A disk load converting unit 221 included in the load converting unit 220 accepts an input of a conversion rate for converting the I/O load of the disk to the CPU load from the inputting device 251 and stores the conversion rate in the disk load conversion table 103 as the I/O load conversion rate. Then, the disk load converting unit 221 converts the I/O load of the disk stored in the disk load table 107 to the CPU load according to the I/O load conversion rate stored in the disk load conversion table 103 using the processing device 253. Further, a network load converting unit 222 included in the load converting unit 220 accepts an input of a conversion rate for converting the I/O load of the network to the CPU load from the inputting device 251 and stores the conversion rate in the network load conversion table 104 as the I/O load conversion rate. Then, the network load converting unit 222 converts the I/O load of the network stored in the network load table 108 to the CPU load according to the I/O load conversion rate stored in the network load conversion table 104 using the processing device 253. Here, configuration examples of the disk load conversion table 103 and the network load conversion table 104 are shown in Figs. 6 and 7, respectively. The disk load conversion table 103 and the network load conversion table 104 store evaluated values of the CPU performance as well as I/O number conversion rates and band conversion rates as the I/O load conversion rates. The I/O number conversion rates and the band conversion rates are values calculated as test results of a benchmark test which is carried out previously. The evaluated values of the CPU performance are values which quantifies performance of the CPU included in the server which is used for the benchmark test.

Concretely, the above benchmark test is carried out by preparing a server A for executing a virtual machine using the same virtualization technique as the server X. The server A includes, similarly to the server X, a HDD and a NIC as well as at least one CPU as hardware resource. The server A is an example of a test server. Here, when the benchmark test is carried out, if the server X is already available to use, it is also possible to use the server X as a server for the benchmark test.

In the above benchmark test, the measured value of the CPU load of the server A generated by issuing I/O requests by the corresponding virtual machine on the server A and the number of the I/O requests are calculated. For example, the former, the measured value, is a value obtained, when the virtual machine executed by the server A requests readings of data from the disk, by measuring the load on the CPU of the server A after corresponding requests are accepted and until data transfers from the disk are started. Then, the latter, the number of the I/O requests is the number of the corresponding requests. The I/O number conversion rate can be obtained by dividing the former, the measured value, by the latter, the number of the I/O requests. Further, in the above benchmark test, the measured value of the CPU load of the server A generated by issuing I/O requests by the corresponding virtual machine on the server A and the corresponding I/O band are calculated. For example, the former, the measured value, is a value obtained, when the virtual machine executed by the server A requests readings of data from the disk, by measuring the load on the CPU of the server A from starting until finishing of the data transfers from the disk. Then, the latter I/O band is the amount of the data transfers from the disk. The band conversion rate can be obtained by dividing the former, the measured value, by the latter, the I/O band. Further, in the above benchmark test, SPECint (benchmark for evaluating integer operation processing performance) of the CPU included in the server A is obtained as the evaluated value of the CPU performance. Note that the evaluated value of the CPU performance can be obtained by a unique benchmark test for evaluating the CPU performance.

As discussed above, the load converting unit 220 previously stores in the memory device 252 the I/O load conversion rate (e.g. the I/O number conversion rate, the band conversion rate) for obtaining the estimated value of the CPU load of the server X (e.g. the CPU use rate of the server X) generated by processing I/Os by the virtual machine from the measured value of the I/O load generated on each of the servers 10 to 12 (e.g. the number of disk I/Os, the disk band, the number of network I/Os, the network band of the servers 10 to 12). Then, the load converting unit 220 calculates by the processing device 253 the estimated value of the CPU load of the server X generated on the server X by processing I/Os by the virtual servers of the servers 10 to 12 from the measured value of the I/O load stored by the load managing unit 212 using the above I/O load conversion rate.

More concretely, the load converting unit 220 previously stores in the memory device 252, as the above I/O load conversion rate, a rate of the measured value of the CPU load of the test server (e.g. the CPU use rate of the server A) generated on the server A executing a virtual machine using the same virtualization technique as the server X by processing I/Os by the corresponding virtual machine and the measured value of the corresponding I/O load (e.g. the number of disk I/Os, the disk band, the number of network I/Os, the network band of the server A). Further, the load converting unit 220 previously stores in the memory device 252 the CPU performance value (e.g. SPECint) which quantifies the performance of the CPU included in the server A. Then, the load converting unit 220 calculates by the processing device 253 the estimated value of the CPU load of the server X generated on the server X by processing I/Os by the virtual servers of the servers 10 to 12 from the measured value of the I/O load stored by the load managing unit 212 using the above I/O load conversion rate, and converts by the processing device 253 the estimated value to a value, for which a difference in performance between the CPU included in the server A and the CPU included in the server X is considered, using the above CPU performance value. Here, to be exact, it is necessary to use not only the CPU performance value of the server A but also the CPU performance value of the server X for obtaining the value for which the difference in performance between the CPU included in the server A and the CPU included in the server X is considered. However, since the value obtained by the load converting unit 220 is not the final estimated value, a calculation using the CPU performance value of the server X is omitted.

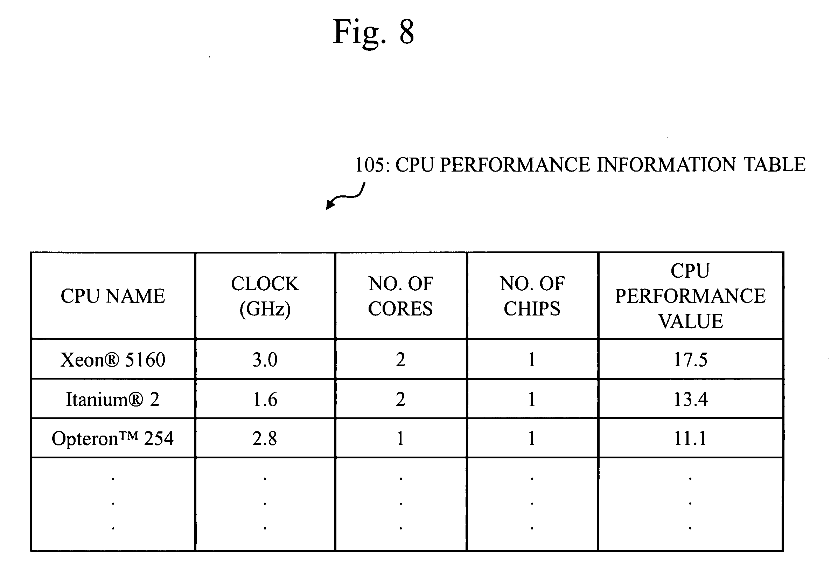

The CPU performance converting unit 223 accepts inputs of information related to the configuration and performance of the CPU from the inputting device 251 and stores the information in the CPU performance information table 105 as the CPU performance information. Then, the CPU performance converting unit 223 converts the CPU use rate stored in the CPU load table 106 to a value, for which a difference of the CPU performances is considered, using the processing device 253 based on the CPU performance information stored in the CPU performance information table 105. Here, a configuration example of the CPU performance information table 105 is shown in Fig. 8. The CPU performance information table 105 stores, for each CPU product, a combination of the clock, the number of cores, the number of chips, and the CPU performance value (e.g. SPECint) of the corresponding CPU. The CPU performance converting unit 223 determines, for example, a CPU product mounted on the server 10 from the configuration information table 101 and the CPU use rate of the server 10 from the CPU load table 106. Then, the CPU performance converting unit 223 determines the CPU performance value of the corresponding CPU product from the CPU performance information table 105, and converts the value of the CPU use rate of the server 10 to a value, for which the difference of the CPU performances is considered, by multiplying the CPU performance value to the CPU use rate.

As discussed above, the CPU performance converting unit 223 previously stores in the memory device 252 the CPU performance value (e.g. SPECint) which quantifies performance of the CPU included in each of the servers 10 to 12. Then, the CPU performance converting unit 223 converts by the processing device 253 the measured value of the CPU load of the servers 10 to 12 (e.g. the CPU use rate of the servers 10 to 12) stored by the load managing unit 212 to a value, for which the difference in performance between the CPU included in each of the servers 10 to 12 and the CPU included in the server X is considered, using the above CPU performance value.

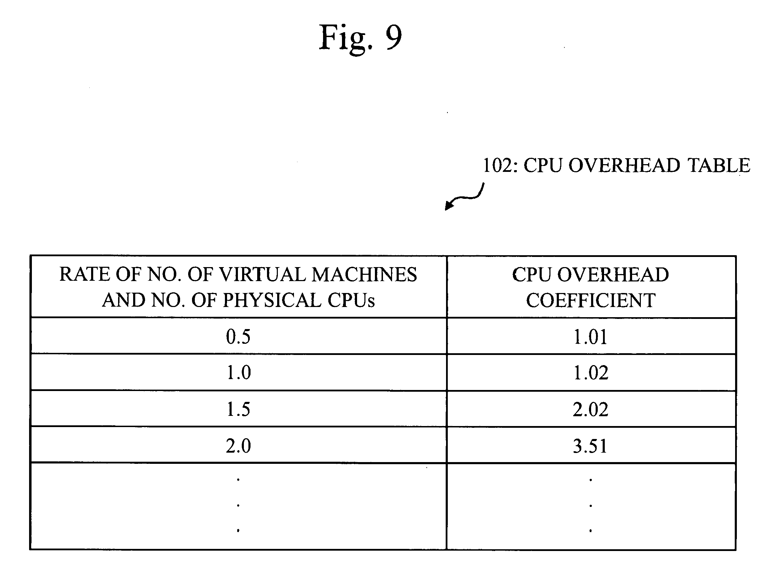

The CPU overhead calculating unit 224 accepts inputs of combinations of the number of virtual machines and a CPU overhead coefficient which is a coefficient for calculating the CPU overhead caused by virtualization, and stores the combinations in the CPU overhead table 102. Then, the CPU overhead calculating unit 224 obtains a rate of the number of virtual machines and the number of CPUs of the server X using the processing device 253, and obtains the CPU overhead coefficient corresponding to the rate from the CPU overhead table 102. Here, a configuration example of the CPU overhead table 102 is shown in Fig. 9. The CPU overhead table 102 stores a rate of the number of virtual machines and the number of physical CPUs and corresponding CPU overhead coefficient. The CPU overhead coefficient shows a proportion of the CPU use rate of the server X which is actually projected when the CPU use rate of the server X without considering the CPU overhead is supposed to be 1. For example, if three virtual machines are executed on the server X, and the CPU use rate is 20% for each virtual machine, the CPU use rate of the server X becomes 60% when simply adding them up. However, since the CPU overhead is actually generated due to the use of virtualization technique, the CPU use rate of the server X becomes greater than 60%. For example, if the CPU overhead is 30%, the CPU use rate of the server X becomes 90%. The CPU overhead coefficient in this case is 1.5.

As discussed above, the CPU overhead calculating unit 224 previously stores in the memory device 252 the rate of the number of virtual machines and the number of CPUs included in the server X, and the CPU overhead coefficient showing the overhead of the CPU load of the server X generated on the server X according to the corresponding rate. Then, the CPU overhead calculating unit 224 extracts from the memory device 252 the CPU overhead coefficient corresponding to the rate of the number of virtual machines actually executed by the server X and the number of CPUs actually included in the server X.

The load estimating unit 225 calculates the system load of the server X when the servers 10 to 12 to be integrated are virtualized for integration into the server X using the processing device 253. Concretely, the load estimating unit 225 sums up the following three values. The first value is a value, for which a difference of CPU performances is considered, converted by the CPU performance converting unit 223 from the CPU use rate stored in the CPU load table 106. The second value is a value, for which a difference of CPU performances is considered, converted by the disk load converting unit 221 included in the load converting unit 220 from the CPU use rate that is converted by the disk load converting unit 221 from the number of disk I/Os and the disk band stored in the disk load table 107. The third value is a value, for which a difference of CPU performances is considered, converted by the network load converting unit 222 included in the load converting unit 220 from the CPU use rate that is converted by the network load converting unit 222 from the number of network I/Os and the network band stored in the network load table 108. Then, the load estimating unit 225 multiplies the CPU overhead coefficient obtained by the CPU overhead calculating unit 224 from the CPU overhead table 102 to the summed value, and further estimates the CPU use rate of the server X using the CPU performance value of the server X. The load estimating unit 225 outputs the estimated CPU use rate of the server X to the outputting device 254.

As discussed above, the load estimating unit 225 calculates by the processing device 253 a sum of the value converted by the CPU performance converting unit 223 (e.g. the value, for which a difference of CPU performances is considered, converted from the CPU use rate of the servers 10 to 12) and the value converted by the load converting unit 220 (e.g. the value, for which a difference of CPU performances is considered, converted from the CPU use rate of the server X that is converted from the number of disk I/Os, the disk band, the number of network I/Os, and the network band of the servers 10 to 12) as the estimated value of the CPU load of the server X (e.g. the CPU use rate of the server X) generated on the server X by running the virtual servers of the servers 10 to 12. Then, the load estimating unit 225 converts by the processing device 253 the sum to a value, for which the CPU overhead is considered, using the CPU overhead coefficient extracted by the CPU overhead calculating unit 224.

The load estimating unit 225 can also simply calculate by the processing device 253 a sum of the measured value of the CPU load of the servers 10 to 12 stored by the load managing unit 212 and the estimated value of the CPU load of the server X calculated by the load converting unit 220 as the estimated value of the CPU load of the server X generated on the server X by running the virtual servers of the servers 10 to 12 instead of the sum of the value converted by the CPU performance converting unit 223 and the value converted by the load converting unit 220.

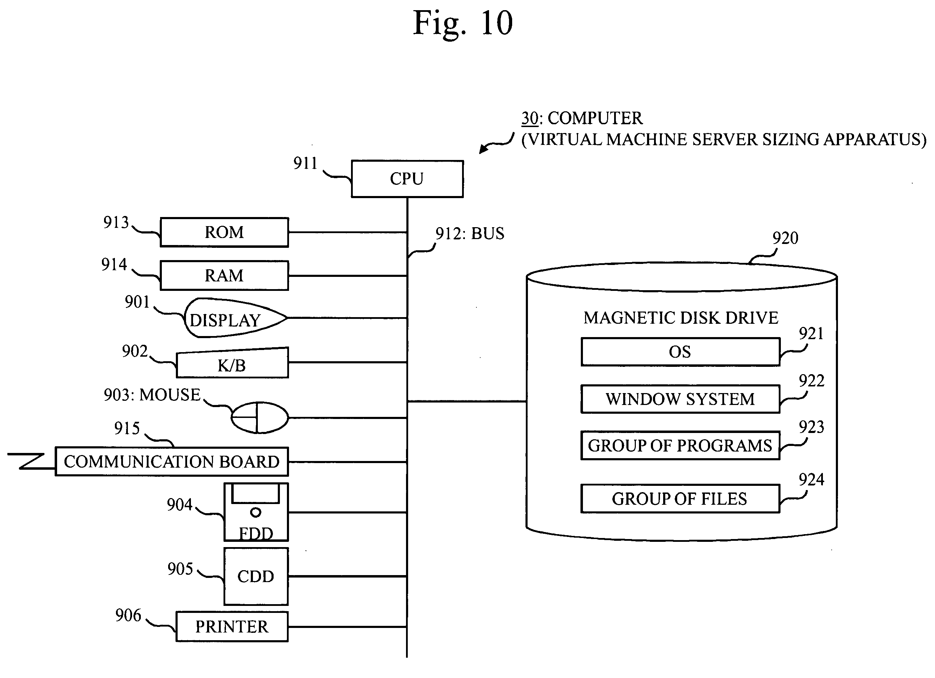

Fig. 10 shows an example of hardware resource of the computer 30.

In Fig. 10, the computer 30 includes hardware resource such as a display device 901 having a display screen of CRT (Cathode Ray Tube) or LCD (Liquid Crystal Display), a keyboard 902 (K/B), a mouse 903, an FDD 904 (Flexible Disk Drive), a CDD 905 (Compact Disc Drive), a printer device 906, etc., which are connected with cables or signal lines. Further, the computer 30 includes a CPU 911 for executing programs. The CPU 911 is an example of the processing device 253. The CPU 911 is connected via a bus 912 to a ROM 913 (Read Only Memory), a RAM 914 (Random Access Memory), a communication board 915 (i.e. NIC), the display device 901, the keyboard 902, the mouse 903, the FDD 904, the CDD 905, the printer device 906, a magnetic disk drive 920 (i.e. HDD) and controls these hardware devices. Instead of the magnetic disk drive 920, storage medium such as an optical disc drive, a memory card reader/writer, etc. can be used.

The RAM 914 is an example of a volatile memory. The storage medium such of the ROM 913, the FDD 904, the CDD 905, and the magnetic disk drive 920 are examples of a non-volatile memory. These are examples of the memory device 252. The communication board 915, the keyboard 902, the mouse 903, the FDD 904, the CDD 905, etc. are examples of the inputting device 251. Further, the communication board 915, the display device 901, the printer device 906, etc. are examples of the outputting device 254.

The communication board 915 is connected to the LAN 20, etc. The communication board 915 can be connected not only to the LAN 20, but also to the Internet or WAN (Wide Are Network), etc. such as IP-VPN (Internet Protocol Virtual Private Network), wide-area LAN, ATM (Asynchronous Transfer Mode) network, etc.

The magnetic disk drive 920 stores an operating system 921, a window system 922, a group of programs 923, and a group of files 924. Programs of the group of programs 923 are executed by the CPU 911, the operating system 921, and the window system 922. The group of programs 923 store programs implementing functions which are explained as "-- unit" in explanation of the present embodiment. The programs are read and executed by the CPU 911. These programs are an example of the virtual machine server sizing program. Further, the group of files 924 store data, information, signal values, variable values, and parameters, which are explained as "-data","-- information", "-- ID", "-- flag", and "-- result" in the explanation of the present embodiment, as items of "-- file", "-- database", and "-- table". "-- file", "-database", and "-- table" are stored in the storage medium such as disks or memories. The data, the information, the signal values, the variable values, and the parameters stored in the storage medium such as disks or memories are read by the CPU 911 via a reading/writing circuit to a main memory or a cache memory and used for processing (operation) of the CPU 911 such as extraction, search, reference, comparison, computation, calculation, control, output, printing, displaying, etc. During the processing of the CPU 911 such as extraction, search, reference, comparison, computation, calculation, control, output, printing, displaying, etc., the data, the information, the signal values, the variable values, or the parameters are temporarily stored in the main memory, the cache memory, or a buffer memory.

Further, an arrow part in block diagrams or flowcharts used for the explanation of the present embodiment mainly shows an input/output of the data or the signals. The data or the signals are recorded in a memory such as the RAM 914, etc., a flexible disk (FD) of the FDD 904, a compact disc (CD) of the CDD 905, a magnetic disk of the magnetic disk drive 920, and other recording medium such as an optical disc, a mini disc (MD), a DVD (Digital Versatile Disc), etc. Further, the data or the signals are transmitted by transmission medium such as the bus 912, the signal lines, the cables, and the like.

Further, "-- unit" explained in the explanation of the present embodiment can be also "-- circuit", "-- device", or "-- equipment", and also "-- step", "-- process", "-procedure", or "-- processing". Namely, what is explained as "-- unit" can be implemented by firmware stored in the ROM 913. Or it can be also implemented by only software, only hardware such as elements, devices, boards, wirings, etc., a combination of software and hardware, or a combination further with firmware. Firmware and software are stored in the recording medium such as the magnetic disk, the flexible disk, the optical disc, the compact disc, the mini disc, the DVD, etc. as programs. The programs are read by the CPU 911 and executed by the CPU 911. That is, the programs are to function a computer as "-- unit" explained in the explanation of the present embodiment. Or it is to have the computer execute a procedure or a method of "-- unit" explained in the explanation of the present embodiment.

In the following, the operation of the system according to the present embodiment (i.e. the virtual machine server sizing method) will be explained.

It is necessary to register the following basic data in the computer 30 beforehand. The configuration managing unit 211 registers, as configuration information of the servers 10 to 12, an IPv4 address, etc. of each server in the configuration information table 101. The configuration managing unit 211 assigns a system ID to each server at the time of registration. The CPU overhead calculating unit 224, the disk load converting unit 221, and the network load converting unit 222 store values calculated from the benchmark test, which is carried out previously, as coefficients or conversion rates in the CPU overhead table 102, the disk load conversion table 103, and the network load conversion table 104. The CPU performance converting unit 223 stores the CPU performance value of SPECint of each server in the CPU performance information table 105. As described before, the CPU performance converting unit 223 may store the CPU performance value calculated by a unique evaluation method in the CPU performance information table 105.

The load measuring units 200 to 202 of the servers 10 to 12 execute load measurement commands implemented in the OS such as vmstat command, sar command, iostat command, etc. on each server, collects at a constant period the CPU use rate (%), the number of disk accesses (number of times/second), the disk access band (kilobytes/second), the number of network accesses (number of times/second), and the network access band (kilobytes/second) of each server, and outputs them to log files. The load collecting unit 213 of the computer 30 connects to the servers 10 to 12 using, for example, SSH (Secure SHell), and reads the record of the system load of each server from the log files using tail command, etc at a constant period. The log files may have any format readable by the load collecting unit 213 such as CSV (Comma Separated Values) format, a binary format, a text format, etc. The load measuring units 200 to 202 of the servers 10 to 12 may store the measured results only in their memories instead of outputting them to the log files. In this case, the load collecting unit 213 of the computer 30 establishes direct connection to the load measuring units 200 to 202 via the LAN 20 and obtains the measured results.

The load collecting unit 213 of the computer 30 obtains information necessary to connect to each server such as an IP address, a log-in account, a password, etc. of each of all the servers registered in the configuration information table 101 or each of specific servers specified by a user using the inputting device 251 from the configuration information table 101 using each system ID as a key The load collecting unit 213 connects to each server using each IP address, log-in account, password, etc. obtained, and collects the measured results of the system load of each server at a constant period. After attaching, to data of the measured results collected by the load collecting unit 213, the collection time and the system ID of the server from which the measured results are collected, the load managing unit 212 of the computer 30 stores the measured results in the CPU load table 106, the disk load table 107, and the network load table 108.

In the following, the operation by the performance designing unit 210 of the computer 30 to estimate the CPU load from estimation condition inputted from the inputting device 251 will be explained. As described before, the CPU load means amount of load on the CPU, for which the difference of CPU performances is absorbed, in the system according to the present embodiment.

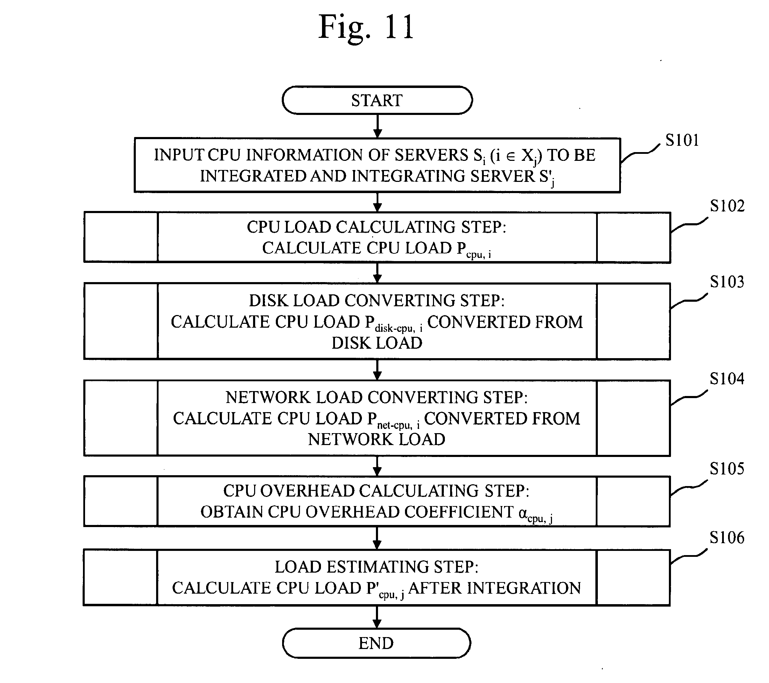

Fig. 11 is a flowchart showing the operation of the performance designing unit 210 of the computer 30.

In Fig. 11, it is assumed that servers to be integrated, which correspond to the servers 10 to 12, are $S_i$ (i = 1, ..., m) and integrating servers, which correspond to the server X, are $S'_j$ (j = m+1, ..., m+n), i and j are system IDs, and m > n. A set of the system IDs of the servers $S_i$ to be integrated to each of the integrating server $S'_j$ is assumed to be $X_j$. The performance designing unit 210 calculates the CPU load $P'_{cpu,i}$ when the servers $S_i$ (i ∈ $X_j$) to be integrated are operated as the virtual servers on the integrating server $S'_j$ in a form with considering the overhead caused by the virtualization in the following procedure.

First, the performance designing unit 210 accepts an input of the system ID of $S_i$ (i ∈ $X_j$) to be integrated to $S'_j$ and inputs of information related to the CPU such as at least a CPU name, a clock, the number of cores, the number of chips, the number of CPUs to be mounted, etc. as specification of the integrating server $S'_j$ from the inputting device 251 (step S101). Next, the performance designing unit 210 calculates the CPU load $P_{cpu,i}$ (i ∈ $X_j$) of each of the servers $S_i$ (i ∈ $X_j$) to be integrated by the processing device 253 (step S102: CPU load calculating step). Further, the performance designing unit 210 calculates the CPU load $P_{disk-cpu, i}$ (i ∈ $X_j$) caused by disk I/Os from the disk load of each of the servers $S_i$ (i ∈ $X_j$) to be integrated by the processing device 253 (step S103: disk load converting step). Further, the performance designing unit 210 calculates the CPU load $P_{net-cpu, i}$ (i ∈ $X_j$) caused by network I/Os from the network load of each of the servers $S_i$ (i ∈ $X_j$) to be integrated by the processing device 253 (step S104: network load converting step). The performance designing unit 210 calculates the CPU overhead coefficient $\alpha_{cpu, j}$ by the processing device 253 (step S105: CPU overhead calculating step). Finally, the performance designing unit 210 calculates the CPU load $P'_{cpu, j}$ after the integration by the processing device 253 and outputs it to the outputting device 254 (step S106: load estimating step).

In the following, a detail of each step of the above steps S102 through S106 will be explained.

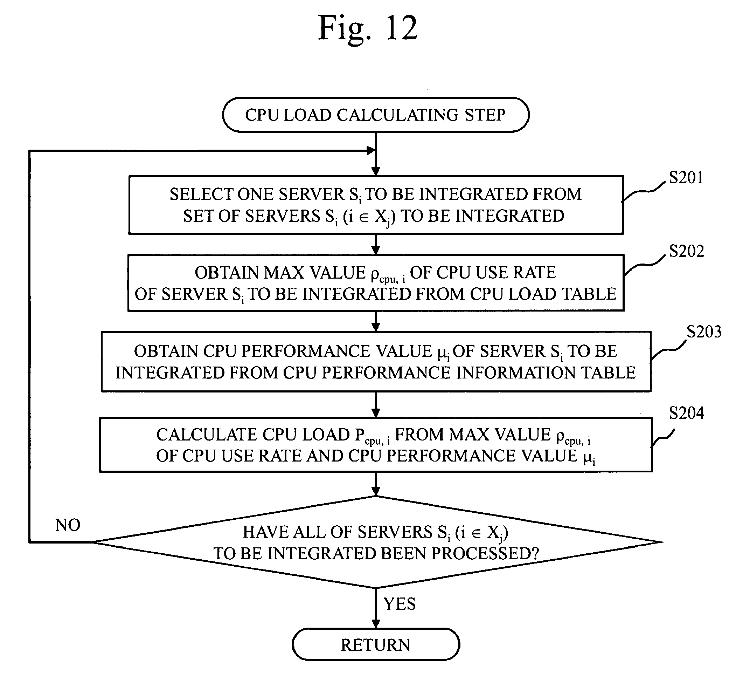

First, a detail of the CPU load calculating step (step S102) will be explained in reference to the flowchart of Fig. 12.

At the CPU load calculating step, the CPU performance converting unit 223 selects one server $S_i$ to be integrated from the set of servers $S_i$ (i ∈ $X_j$) to be integrated (step S201). The CPU performance converting unit 223 obtains the user use rate of the CPU of the selected server $S_i$ to be integrated, the system use rate of the CPU, and the rate of I/O waiting of the CPU at every 10 seconds stored by the load managing unit 212 in the CPU load table 106 using the system ID of the selected server $S_i$ to be integrated as a key. The CPU performance converting unit 223 adds them up to obtain a value of the CPU use rate of the server $S_i$ to be integrated at every 10 seconds and selects the maximum value $\rho_{cpu, i}$ of the CPU use rate from among the obtained values of the CPU use rate by the processing device 253 (step S202).

By referencing the CPU information (e.g. the CPU name, the number of CPUs) of the server $S_i$ to be integrated stored by the configuration managing unit 211 in the configuration information table 101, the CPU performance converting unit 223 obtains the CPU performance value $\mu_i$ corresponding to the CPU of the server $S_i$ to be integrated from the CPU performance information table 105 (step S203). The CPU performance converting unit 223 calculates the CPU load $P_{cpu, i}$ with considering the difference in performance between the CPUs by the following expression (1) by the processing device 253 using the maximum value $\rho_{cpu, i}$ of the CPU use rate of the server $S_i$ to be integrated obtained at step S202 and the CPU performance value $\mu_i$ obtained at step S203 (step S204).

$$P_{cpu, i} = \mu_i \times \rho_{cpu, i} \cdots (1)$$

Then, after obtaining the CPU load $P_{cpu, i}$ for all of the servers $S_i$ ($i \in X_j$) to be integrated, the CPU performance converting unit 223 finishes the CPU load calculating step.

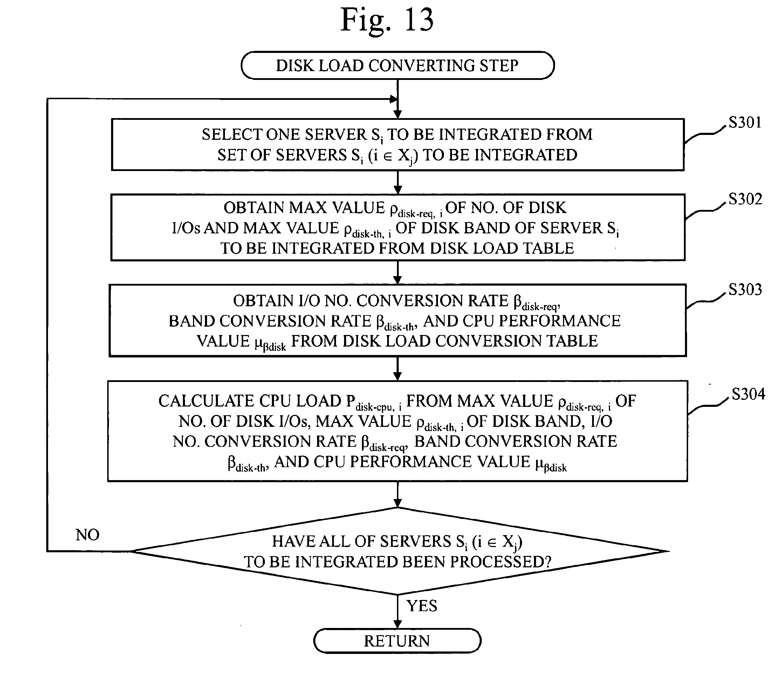

Next, a detail of the disk load converting step (step S103) will be explained in reference to the flowchart of Fig. 13.

At the disk load converting step, the disk load converting unit 221 selects one server $S_i$ to be integrated from the set of servers $S_i$ ($i \in X_j$) to be integrated (step S301). The disk load converting unit 221 obtains the number of reading requests of the disk and the number of writing requests of the disk of the selected server $S_i$ to be integrated at every 10 seconds stored by the load managing unit 212 in the disk load table 107 using the system ID of the selected server $S_i$ to be integrated as a key. The disk load converting unit 221 adds them to obtain a value of the number of disk I/Os of the server $S_i$ to be integrated at every 10 seconds and selects the maximum value $\rho_{disk-req, i}$ of the number of disk I/Os from among the obtained values of the number of disk I/Os by the processing device 253. Further, the disk load converting unit 221 obtains the reading speed of the disk and the writing speed of the disk of the selected server $S_i$ to be integrated at every 10 seconds stored by the load managing unit 212 in the disk load table 107 using the system ID of the selected server $S_i$ to be integrated as a key. The disk load converting unit 221 adds them to obtain a value of the disk band of the server $S_i$ to be integrated at every 10 seconds and selects the maximum value $\rho_{disk-th, i}$ of the disk band from among the obtained values of the disk band by the processing device 253 (step S302). The disk load converting unit 221 obtains the I/O number conversion rate $\beta_{disk-req}$, the band conversion rate $\beta_{disk-th}$, and the CPU performance value $\mu_{\beta disk}$ from the disk load conversion table 103 (step S303). The disk load converting unit 221 calculates the CPU load $P_{disk-cpu, i}$ converted from the disk load by the following expression (2) using the maximum value $\rho_{disk-req, i}$ of the number of disk I/Os and the maximum value $\rho_{disk-th, i}$ or the disk band obtained at step S302 and the I/O number conversion rate $\rho_{disk-req}$, the band conversion rate $\beta_{disk-th}$, and the CPU performance value $\mu_{\beta disk}$ obtained at step S303 with considering the difference in performance between CPUs by the processing device 253 (step S304).

$$P_{disk-cpu, i} = \mu_{\beta disk} (\beta_{disk-req} \cdot \rho_{disk-req, i} + \beta_{disk-th} \cdot \rho_{disk-th, i}) \cdots (2)$$

Then, after obtaining the CPU load $P_{disk-cpu, i}$ for all servers $S_i$ ($i \in X_j$) to be integrated, the disk load converting unit 221 finishes the disk load converting step.

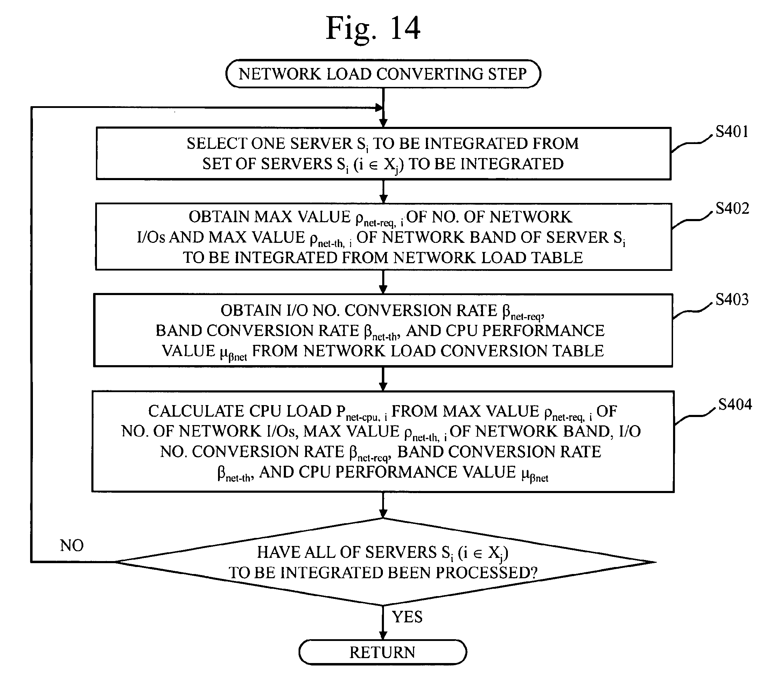

Next, a detail of the network load converting step (step S104) will be explained in reference to the flowchart of Fig. 14.

At the network load converting step, the network load converting unit 222 selects one server $S_i$ to be integrated from the set of servers $S_i$ ($i \in X_j$) to be integrated (step S401). The network load converting unit 222 obtains the number of receiving requests of the network and the number of sending requests of the network of the selected server $S_i$ to be integrated at every 10 seconds stored by the load managing unit 212 in the network load table 108 using the system ID of the selected server $S_i$ to be integrated as a key. The network load converting unit 222 adds them to obtain a value of the number of network I/Os of the server $S_i$ to be integrated at every 10 seconds and selects the maximum value $\rho_{net-req, i}$ of the number of network I/Os from among the obtained values of the number of network I/Os by the processing device 253. Further, the network load converting unit 222 obtains the receiving speed of the network and the sending speed of the network of the selected server $S_i$ to be integrated at every 10 seconds stored by the load managing unit 212 in the network load table 108 using the system ID of the selected server $S_i$ to be integrated as a key. The network load converting unit 222 adds them to obtain a value of the network band of the server $S_i$ to be integrated at every 10 seconds and selects the maximum value $\rho_{net-th, i}$ of the disk band from among the obtained values of the network band by the processing device 253 (step S402). The network load converting unit 222 obtains the I/O number conversion rate $\beta_{net-req}$, the band conversion rate $\beta_{net-th}$, and the CPU performance value $\mu_{\beta disk}$ from the network load conversion table 104 (step S403). The network load converting unit 222 calculates the CPU load $P_{net-cpu, i}$ converted from the network load by the following expression (3) using the maximum value $\rho_{net-req, i}$ of the number of network I/Os and the maximum value $\rho_{net-th, i}$ of the network band obtained at step S402 and the I/O number conversion rate $\beta_{net-req}$, the band conversion rate $\beta_{net-th}$, and the CPU performance value $\mu_{\beta net}$ obtained at step S403 with considering the difference in performance between CPUs by the processing device 253 (step S404).

$$P_{net-cpu, i} = \mu_{\beta net} \left( \beta_{net-req} \cdot \rho_{net-req, i} + \beta_{net-th} \cdot \rho_{net-th, i} \right) \cdots (3)$$

Then, after obtaining the CPU load $P_{net-cpu, i}$ for all servers $S_i$ ($i \in X_j$) to be integrated, the network load converting unit 222 finishes the network load converting step.

Next, a detail of the CPU overhead calculating step (step S105) will be explained.

At the CPU overhead calculating step, the CPU overhead calculating unit 224 calculates a rate of the number of servers $S_i$ ($i \in X_j$) to be integrated (i.e. the number of virtual machines) and the number of CPUs of the integrating server $S'_j$ by the processing device 253. Then, the CPU overhead calculating unit 224 obtains the CPU overhead coefficient $\alpha_{cpu, j}$ having the closest value to the calculated rate in the column "the rate of the number of virtual machines and the number of physical CPUs" from the CPU overhead table 102.

Finally, a detail of the load estimating step (step S106) will be explained.

At the load estimating step, the load estimating unit 225 calculates the CPU load $P'_{cpu, j}$ with considering the difference in performance between CPUs when the servers $S_i$ ($i \in X_j$) to be integrated are operated on the integrating server $S'_j$ as the virtual servers by the following expression (4) using the CPU load $P_{cpu, i}$ calculated at the CPU load calculating step, the CPU load $P_{disk-cpu, i}$ calculated at the disk load converting step, the CPU load $P_{net-cpu, i}$ calculated at the network load converting step, the CPU overhead coefficient $\alpha_{cpu, j}$ obtained at the CPU overhead calculating step by the processing device 253.

$$P'_{cpu, j} = \alpha_{cpu, j} \left( \Sigma P_{cpu, i} + \Sigma P_{disk-cpu, i} + \Sigma P_{net-cpu, i} \right) \cdots (4)$$

Then, the load estimating unit 225 calculates the estimated value $\rho'_{cpu, j}$ of the CPU use rate of the servers $S_i$ ($i \in X_j$) to be integrated when the servers $S_i$ ($i \in X_j$) to be integrated are operated on the integrating server $S'_j$ as the virtual servers by the following expression (5) using the CPU load $P'_{cpu, j}$ calculated and the CPU performance value $\mu'_j$ of the integrating server $S'_j$ by the processing device 253.

$$\rho'_{cpu, j} = P'_{cpu, j} / \mu'_j \cdots (5)$$

Then, the load estimating unit 225 displays the estimated value $\rho'_{cpu, j}$ of the CPU use rate on, for example, a screen by the outputting device 254 and finishes the load estimating step.

As mentioned above, according to the present embodiment, in the process for estimating the CPU load after server integration, it is possible to improve the accuracy in estimation of the CPU load by estimating the CPU load generated by the I/O emulation at the time of virtualization based on the information of the disk load and the network load before integrating servers and reflecting the corresponding estimated value to the final estimated value of the CPU load.

In the present embodiment, the measured results of the system load collected from the servers to be integrated are stored in the CPU load table 106, the disk load table 107, and the network load table 108, respectively; however, it is also possible to integrate these tables into one system load table using each system ID as a key. Further, it is also possible to use a table having different configuration as long as the table stores necessary columns in time series and is searchable using each system ID as a key.

As discussed above, according to the present embodiment, the system includes multiple servers 10 to 12 to be integrated and the computer 30 which operates as a virtual machine server sizing apparatus, and they are connected via network. The servers 10 to 12 have the load measuring units 200 - 202. The computer 30 includes the display device 901, the inputting device 251, the performance designing unit 210, the configuration managing unit 211, the load managing unit 212, the load collecting unit 213, the configuration information table 101, the CPU overhead table 102, the disk load conversion table 103, the network load conversion table 104, the CPU performance information table 105, the CPU load table 106, the disk load table 107, and the network load table 108. The performance designing unit 210 includes the disk load converting unit 221, the network load converting unit 222, the CPU performance converting unit 223, the CPU overhead calculating unit 224, and the load estimating unit 225. The disk load table 107 stores the number of disk accesses and the disk access band collected from the servers 10 to 12. The network load table 108 stores the number of network accesses and the network access band collected from the servers 10 to 12. The disk load conversion table 103 stores the conversion rate for calculating the CPU load from the number of disk accesses and the disk access band. The network load conversion table 104 stores the conversion rate for calculating the CPU load from the number of network accesses and the network access band.

The disk load conversion table 103 stores the I/O number conversion rate for converting the number of disk accesses to the CPU load and the band conversion rate for converting the disk access band to the CPU load. The disk load converting unit 221 calculates the CPU load from the number of disk accesses, the disk access band, the I/O number conversion rate, and the band conversion rate by the disk load converting expression (2). The network load conversion table 104 stores the I/O number conversion rate for converting the number of network accesses to the CPU load and the band conversion rate for converting the network access band to the CPU load. The network load converting unit 222 calculates the CPU load from the number of network accesses, the network access band, the I/O number conversion rate, and the band conversion rate by the network load converting expression (3).

The disk load conversion table 103 stores the CPU performance value of the server A for calculating at the time of calculating the conversion rate. The disk load converting unit 221 calculates the CPU load from the number of disk accesses, the disk access band, the I/O number conversion rate, the band conversion rate, the CPU performance value of the servers 10 to 12 to be integrated, and the CPU performance value of the server A by the disk load converting expression (2). The network load conversion table 104 stores the CPU performance value of the server A for calculating at the time of calculating the conversion rate. The network load converting unit 222 calculates the CPU load from the number of network accesses, the network access band, the I/O number conversion rate, the band conversion rate, the CPU performance value of the servers 10 to 12 to be integrated, and the CPU performance value of the server A by the network load converting expression (3).

The CPU overhead table 102 stores the rate of the number of virtual machines and the physical CPUs and the CPU overhead coefficients which differ for each value of the rate. The load estimating unit 225 estimates the CPU load of the server X from the CPU load of the servers 10 to 12 to be integrated, the CPU load calculated by the disk load converting expression (2), and the CPU load calculated by the network load converting expression (3), with considering effect of the rate of the number of virtual machines and the number of physical CPUs of the server X to the CPU load of the server X.

According to the present embodiment, as discussed above, the CPU load necessary for I/O emulation under the virtualization environment is converted from the disk load and the network load, so that it is possible to improve the accuracy in estimating the CPU load after integrating servers.

Embodiment 2.

The present embodiment, in particular a difference from the first embodiment, will be explained.

In the first embodiment, at the CPU load calculating step, the disk load converting step, and the network load converting step, the maximum values of the CPU use rate, the number of disk I/Os, the disk band, the number of network I/Os, and the network band of the server to be integrated are obtained from the CPU load table 106, the disk load table 107, and the network load table 108, and these values are used for estimating the CPU load of each integrating server. However, it is also possible to use, for example, mean values, percentile values (e.g. 90 percentile values), etc. instead of the maximum values. Further, it is also possible to calculate and output multiple estimated values of the CPU load of each integrating server using multiple types of values among, for example, the maximum values, the minimum values, the percentile values, etc.

As mentioned above, according to the present embodiment, it is possible to improve further the accuracy in estimating the CPU load by obtaining multiple estimated values in the process for estimating the CPU load after server integration.

Embodiment 3.

The present embodiment, in particular a difference from the first embodiment, will be explained.

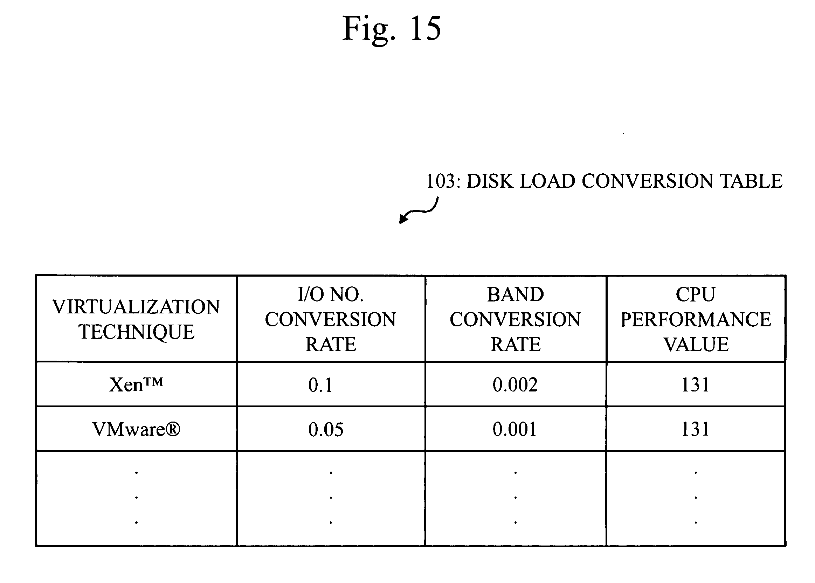

Configuration examples of the disk load conversion table 103, the network load conversion table 104, and the CPU overhead table 102 according to the present embodiment are shown in Figs. 15, 16, and 17, respectively. The difference from the disk load conversion table 103, the network load conversion table 104, and the CPU overhead table 102 of the first embodiment shown in Figs. 6, 7, and 9 is that a new column is added to each table to specify the virtualization technique.

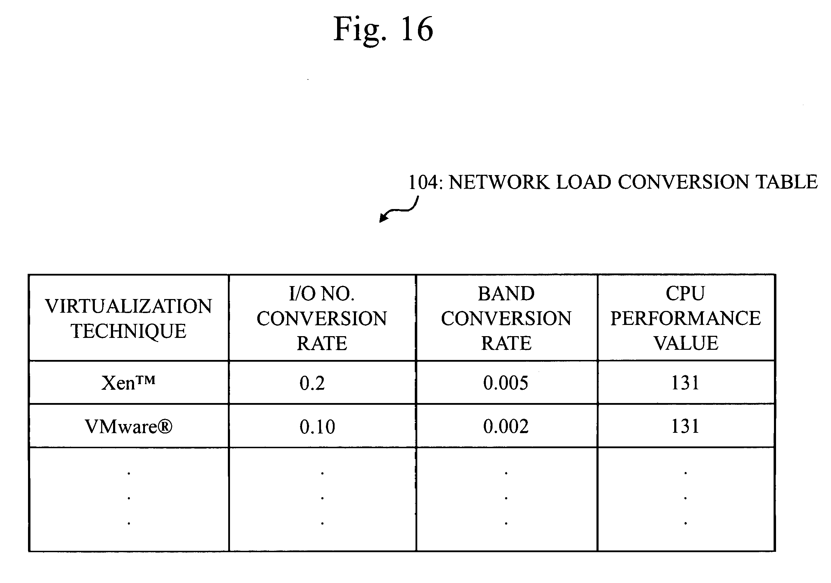

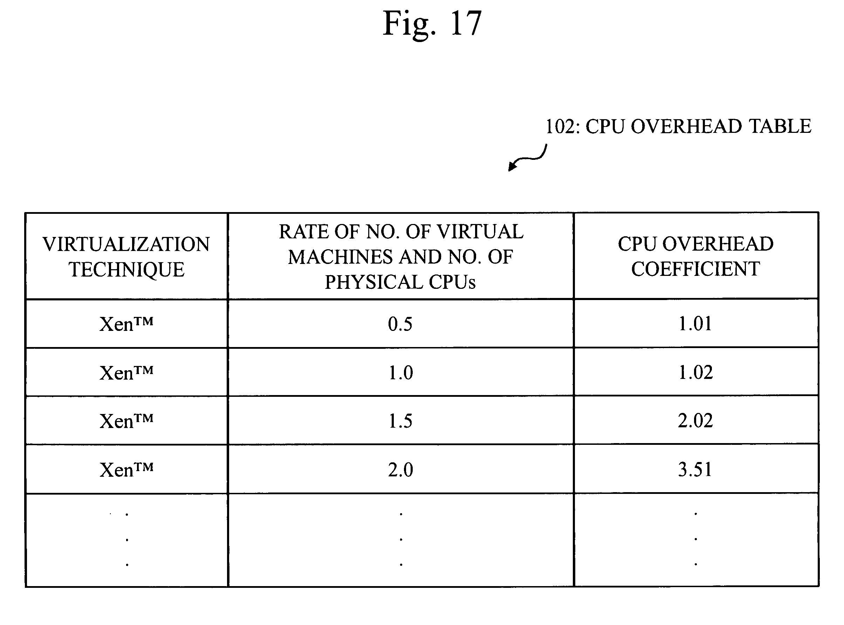

The disk load conversion table 103 shown in Fig. 15 and the network load conversion table 104 shown in Fig. 16 store, for each kind of virtualization technique used for the benchmark test, the I/O number conversion rate, the band conversion rate, and the CPU performance value which are the results of the benchmark test. Similarly, the CPU overhead table 102 shown in Fig. 17 stores, for each kind of virtualization technique used for the benchmark test, the CPU overhead coefficient which is the result of the benchmark test. The kinds of virtualization technique can be classified by virtualization software used for the benchmark test such as VMware (registered trademark), Xen, etc., by virtualization methods used for the benchmark test such as full virtualization, paravirtualization, etc., or by a combination of the software and the method.

In the first embodiment, at step S101 of Fig. 11, the performance designing unit 210 accepts an input of the information related to the CPU as the specification of the integrating server $S'_j$ from the inputting device 251; however, in the present embodiment, the performance designing unit 210 further accepts an input of the information related to the virtualization software or the virtualization method as the virtualization technique used by the integrating server $S'_j$.

At step S303 in Fig. 13, the disk load converting unit 221 obtains the I/O number conversion rate $\beta_{disk-req}$, the band conversion rate $\beta_{disk-th}$, the CPU performance value $\mu_{\beta disk}$ from the disk load conversion table 103 using a kind of the virtualization technique used by the integrating server $S'_j$ as a key. Similarly, at step S403 in Fig. 14, the network load converting unit 222 obtains the I/O number conversion rate $\beta_{net-req}$, the band conversion rate $\beta_{net-th}$, and the CPU performance value $\mu\beta_{net}$ from the network load conversion table 104.

As discussed above, in the present embodiment, the load converting unit 220 previously stores in the memory device 252, as the I/O load conversion rate, which has been discussed above, a rate of a measured value of the CPU load of the server A (e.g. the CPU use rate of the server A) generated, on each of multiple servers A each of which executes a virtual machine using different virtualization technique (e.g. the virtualization software, the virtualization method), by processing I/O by the corresponding virtual machine and a measured value of the corresponding I/O load (e.g. the number of disk I/Os, the disk band, the number of network I/Os, and the network band of the server A). Then, the load converting unit 220 calculates the estimated value of the CPU load of the server X generated on the server X by processing I/Os by the virtual servers of the servers 10 to 12 using the I/O load conversion rate corresponding to the server A which uses the same virtualization technique as the server X.

Further, in the present embodiment, the CPU overhead calculating unit 224 previously stores items for specifying the virtualization technique (e.g. the virtualization software, the virtualization method), the rate of the number of the virtual machines and the number of CPUs included in the server X, and the CPU overhead coefficient showing an overhead of the CPU load of the server X generated according to the virtualization technique specified by the corresponding items on the server X and the corresponding rate in the memory device 252. Then, the CPU overhead calculating unit 224 extracts the CPU overhead coefficient corresponding to the virtualization technique which is actually used by the server X and the rate of the number of the virtual machines actually executed by the server X and the number of CPUs actually included in the server X from the memory device 252.

As mentioned above, according to the present embodiment, it is possible to estimate with higher accuracy by using the conversion rate or the coefficient for which the effect of the virtualization technique or the virtualization method is considered.

As discussed above, in the system related to the present embodiment, the disk load conversion table 103 and the network load conversion table 104 store the information specifying the virtualization product such as VMware (registered trademark) or Xen, and further stores different I/O number conversion rates and different band conversion rates for each of the virtualization products. The disk load converting unit 221 calculates the CPU load by the disk load converting expression (2) with considering the effect of the difference of the virtualization products to the conversion. The network load converting unit 222 calculates the CPU load by the network load converting expression (3) with considering the effect of the difference of the virtualization products to the conversion.

Further, in the system related to the present embodiment, the disk load conversion table 103 and the network load conversion table 104 store the information specifying the virtualization method such as complete virtualization or quasi-virtualization, and further stores different I/O number conversion rates and different band conversion rates for each of the virtualization methods. The disk load converting unit 221 calculates the CPU load by the disk load converting expression (2) with considering the effect of the difference of the virtualization methods to the conversion. The network load converting unit 222 calculates the CPU load by the network load converting expression (3) with considering the effect of the difference of the virtualization methods to the conversion.

Embodiment 4.

The present embodiment, in particular a difference from the third embodiment, will be explained.

In the third embodiment, as shown in each of Figs. 15, 16, and 17, each of the disk load conversion table 103, the network load conversion table 104, and the CPU overhead table 102 includes a column for specifying the virtualization technique; similarly, in the present embodiment, the network load conversion table 104 includes another column for specifying a network topology showing if the communication is within the physical machine or with the outside of the physical machine.

The network load conversion table 104 stores separate values, according to whether the virtual machine communicates within the server A or the virtual machine communicates with the outside of the server A at the time of the benchmark test, for each of the I/O number conversion rate, the band conversion rate, and the CPU performance value which are the results of the benchmark test. Under the virtualized environment, when two guest OSs on the same physical machine communicate, the communication becomes the one within the physical machine. Hence, the CPU use rate due to the I/O emulation becomes higher than the communication with the outside of the physical machine, since, for example, the load onto the switch provided by the virtualization mechanism becomes high. The effect of such situation is considered in the present embodiment.

As discussed above, in the present embodiment, the load converting unit 220 previously stores in the memory device 252, as the I/O load conversion rate, which has been discussed above, the rate of the measured value of the CPU load of the server A (e.g. the CPU use rate of the server A) generated, on each of two servers A, one of which executes a virtual machine for carrying out the first communication process communicating with another virtual machine executed by the same physical machine (i.e. a virtual machine communicating with another virtual machine within one server A) and the other executes a virtual machine for carrying out the second communication process communicating with a different physical machine (i.e. a virtual machine executed by one server A for communicating with a virtual machine executed by another server A), by processing I/Os of the network by the corresponding virtual machine and the measured value of the corresponding I/O load (e.g. the number of network I/Os, the network band of the server A). Then, the load converting unit 220 calculates the estimated value of the CPU load of the server X (e.g. the CPU use rate of the server X) generated on the server X by processing I/Os of the network by the virtual servers of the servers 10 to 12 using the I/O load conversion rate corresponding to the server A which executes the virtual machine for carrying out the same communication process as the server X out of the above first communication process and the above second communication process.

As mentioned above, according to the present embodiment, by using the conversion rate for which the effect caused by the network topology is considered, it is possible to carry out the estimation with higher accuracy.

As discussed above, in the system according to the present embodiment, the network load conversion table 104 stores information specifying topology showing if the communication is inside the physical machine or the communication is between the physical machines and also stores the number of I/O conversion rates and the band conversion rates which are different for each topology. The network load converting unit 222 calculates the CPU load by the network load converting expression (3) with considering the effect of the difference of topologies to the conversion.

The embodiments of the present invention have been explained above. Among them, it is also possible to implement a combination of two or more embodiments. Or, among them, it is also possible to implement partially one of the embodiments. Or, among them, it is also possible to implement a partial combination of two or more embodiments.

Having thus described several particular embodiments of the present invention, various alterations, modifications, and improvements will readily occur to those skilled in the art. Such alterations, modifications, and improvements are intended to be part of this disclosure, and are intended to be within the spirit and scope of the present invention. Accordingly, the foregoing description is by way of example only, and is not intended to be limiting. The present invention is limited only as defined in the following claims and the equivalents thereto.

**Claims**

1. A virtual machine server sizing apparatus calculating an estimated value of CPU (Central Processing Unit) load of a virtual machine server generated by running, on the virtual machine server executing a plurality of virtual machines, each of a plurality of virtual servers that virtualize a plurality of real servers in each of the plurality of virtual machines, the virtual machine server sizing apparatus comprising:

   a load managing unit for storing in a memory device a measured value of CPU load of a real server generated on each of the plurality of real servers and a measured value of I/O (Input/Output) load of a disk and/or a network generated on each of the plurality of real servers;
   a load converting unit for previously storing in the memory device an I/O load conversion rate for obtaining an estimated value of CPU load of the virtual machine server generated by processing I/O by a virtual machine from a measured value of I/O load generated on each of the plurality of real servers, and calculating by a processing device an estimated value of CPU load of the virtual machine server generated on the virtual machine server by processing I/O by each of the plurality of virtual servers from the measured value of the I/O load stored by the load managing unit using the I/O load conversion rate; and
   a load estimating unit for calculating by the processing device a sum of the measured value of the CPU load of the real server stored by the load managing unit and the estimated value of the CPU load of the virtual machine server calculated by the load converting unit as the estimated value of the CPU load of the virtual machine server generated on the virtual machine server by running each of the plurality of virtual servers.

**2.** The virtual machine server sizing apparatus of claim 1, further comprising:

a CPU performance converting unit for previously storing in the memory device a CPU performance value which quantifies performance of a CPU included in each of the plurality of real servers, and converting by the processing device the measured value of the CPU load of the real server stored by the load managing unit to a value, for which a difference in performance between the CPU included in each of the plurality of real servers and the CPU included in the virtual machine server is considered, using the CPU performance value,

wherein the load estimating unit calculates the sum using the value converted by the CPU performance converting unit instead of the measured value of the CPU load of the real server stored by the load managing unit.

**3.** The virtual machine server sizing apparatus of claim 1,
wherein the load converting unit previously stores in the memory device, as the I/O load conversion rate, a rate of a measured value of CPU load of a test server generated on the test server executing a virtual machine using same virtualization technique as the virtual machine server by processing I/O by a corresponding virtual machine and a measured value of corresponding I/O load.

**4.** The virtual machine server sizing apparatus of claim 3,
wherein the load converting unit previously stores in the memory device a CPU performance value which quantifies performance of a CPU included in the test server, and converts by the processing device the estimated value of the CPU load of the virtual machine server generated on the virtual machine server by processing I/O by each of the plurality of virtual servers to a value, for which a difference in performance between the CPU included in the test server and the CPU included in the virtual machine server is considered, using the CPU performance value, and wherein the load estimating unit calculates the sum using the value converted by the load converting unit instead of the estimated value of the CPU load of the virtual machine server calculated by the load converting unit.

**5.** The virtual machine server sizing apparatus of claim 3,
wherein the load managing unit stores in the memory device, as the measured value of the I/O load generated on each of the plurality of real servers, a number of I/O requests of a disk and/or a network measured at every unit of time in each of the plurality of real servers and I/O band of a disk and/or a network measured at every unit of time in each of the plurality of real servers, and
wherein the load converting unit previously stores in the memory device, as the I/O load conversion rate, an I/O number conversion rate obtained by dividing a measured value of CPU load of the test server generated on the test server by issuing an I/O request by the corresponding virtual machine with a corresponding number of I/O requests and a band conversion rate obtained by dividing a measured value of CPU load of the test server generated on the test server by executing the I/O request by the corresponding virtual machine with a corresponding I/O band, and calculates by the processing device, as the estimated value of the CPU load of the virtual machine server generated on the virtual machine server by processing I/O by each of the plurality of virtual servers, a summed value of a multiplied value of the I/O number conversion rate and the number of I/O requests stored by the load managing unit and a multiplied value of the band conversion rate and the I/O band stored by the load managing unit.

**6.** The virtual machine server sizing apparatus of claim 3,
wherein the load converting unit previously stores in the memory device, as the I/O load conversion rate, a rate of a measured value of CPU load of a test server generated, on each of a plurality of test servers each of which executes a virtual machine using different virtualization technique, by processing I/O by a corresponding virtual machine and a measured value of corresponding I/O load, and calculates the estimated value of the CPU load of the virtual machine server generated on the virtual machine server by processing I/O by each of the plurality of virtual servers using an I/O load conversion rate corresponding to a test server which uses same virtualization technique as the virtual machine server.

**7.** The virtual machine server sizing apparatus of claim 3,
wherein the load managing unit stores in the memory device a measured value of I/O load of a network generated on each of the plurality of real servers, and
wherein the load converting unit previously stores in the memory device, as the I/O conversion rate, a rate of a measured value of CPU load of a test server generated, on each of two test servers, one of which executes a virtual machine for carrying out a first communication process communicating with another virtual machine executed by a same physical machine and an other executes a virtual machine for carrying out a second communication process communicating with a different physical machine, by processing I/O of a network by a corresponding virtual machine and a measured value of corresponding I/O load, and calculates the estimated value of the CPU load of the virtual machine server generated on the virtual machine server by processing I/O of a network by each of the plurality of virtual servers using an I/O load conversion rate corresponding to a test server which executes a virtual machine for carrying out a same communication process as the virtual machine server out of the first communication process and the second communication process.

8. The virtual machine server sizing apparatus of claim 1 further comprising:

   a CPU overhead calculating unit for previously storing in the memory device a rate of a number of virtual machines and a number of CPUs included in the virtual machine server and a CPU overhead coefficient showing overhead of CPU load of the virtual machine server generated on the virtual machine server according to a corresponding rate, and extracting from the memory device a CPU overhead coefficient corresponding to a rate of a number of the plurality of virtual machines and a number of CPUs included in the virtual machine server,

   wherein the load estimating unit converts by the processing device the sum to a value, for which the overhead is considered, using the CPU overhead coefficient extracted by the CPU overhead calculating unit.

9. The virtual machine server sizing apparatus of claim 8,
   wherein the CPU overhead calculating unit previously stores in the memory device an item specifying virtualization technique, a rate of a number of virtual machines and a number of CPUs included in the virtual machine server, and a CPU overhead coefficient showing overhead of CPU load of the virtual machine server generated on the virtual machine server according to virtualization technique specified by a corresponding item and a corresponding rate, and extracts from the memory device a CPU overhead coefficient corresponding to virtualization technique used by the virtual machine server and the rate of the number of the plurality of virtual machines and the number of CPUs included in the virtual machine server.

10. A virtual machine server sizing method calculating an estimated value of CPU (Central Processing Unit) load of a virtual machine server generated by running, on the virtual machine server executing a plurality of virtual machines, each of a plurality of virtual servers that virtualize a plurality of real servers in each of the plurality of virtual machines, the virtual machine server sizing method comprising:

    by a memory device of a computer, storing a measured value of CPU load of a real server generated on each of the plurality of real servers and a measured value of I/O (Input/Output) load of a disk and/or a network generated on each of the plurality of real servers;
    by the memory device of the computer, previously storing an I/O load conversion rate for obtaining an estimated value of CPU load of the virtual machine server generated by processing I/O by a virtual machine from a measured value of I/O load generated on each of the plurality of real servers,
    by a processing device of the computer, calculating an estimated value of CPU load of the virtual machine server generated on the virtual machine server by processing I/O by each of the plurality of virtual servers from the measured value of the I/O load stored by the memory device using the I/O load conversion rate; and
    by the processing device of the computer, calculating a sum of the measured value of the CPU load of the real server stored by the memory device and the estimated value of the CPU load of the virtual machine server calculated by the processing device as the estimated value of the CPU load of the virtual machine server generated on the virtual machine server by running each of the plurality of virtual servers.

11. A virtual machine server sizing program calculating an estimated value of CPU (Central Processing Unit) load of a virtual machine server generated by running, on the virtual machine server executing a plurality of virtual machines, each of a plurality of virtual servers that virtualize a plurality of real servers in each of the plurality of virtual machines, the virtual machine server sizing program having a computer execute:

    a load managing procedure for storing in a memory device a measured value of CPU load of a real server generated on each of the plurality of real servers and a measured value of I/O (Input/Output) load of a disk and/or a network generated on each of the plurality of real servers;
    a load converting procedure for previously storing in the memory device an I/O load conversion rate for obtaining an estimated value of CPU load of the virtual machine server generated by processing I/O by a virtual machine from a measured value of I/O load generated on each of the plurality of real servers, and calculating by a processing device an estimated value of CPU load of the virtual machine server generated on the virtual machine server by processing I/O by each of the plurality of virtual servers from the measured value of the I/O load stored by the load managing procedure using the I/O load conversion rate; and

a load estimating procedure for calculating by the processing device a sum of the measured value of the CPU load of the real server stored by the load managing procedure and the estimated value of the CPU load of the virtual machine server calculated by the load converting procedure as the estimated value of the CPU load of the virtual machine server generated on the virtual machine server by running each of the plurality of virtual servers.

# Fig. 1

**COMPUTER (VIRTUAL MACHINE SERVER SIZING APPARATUS)** — 30

- PROCESSING DEVICE — 253
- INPUTTING DEVICE — 251
- OUTPUTTING DEVICE — 254

**PERFORMANCE DESIGNING UNIT** — 210 / 220

- LOAD CONVERTING UNIT
  - DISK LOAD CONVERTING UNIT — 221
  - NETWORK LOAD CONVERTING UNIT — 222
- CPU PERFORMANCE CONVERTING UNIT — 223
- CPU OVERHEAD CALCULATING UNIT — 224
- LOAD ESTIMATING UNIT — 225

- CONFIGURATION MANAGING UNIT — 211
- LOAD MANAGING UNIT — 212
- LOAD COLLECTING UNIT — 213

**MEMORY DEVICE** — 252

- CONFIGURATION INFORMATION TABLE — 101
- CPU OVERHEAD TABLE — 102
- DISK LOAD CONVERSION TABLE — 103
- NETWORK LOAD CONVERSION TABLE — 104
- CPU PERFORMANCE INFORMATION TABLE — 105
- CPU LOAD TABLE — 106
- DISK LOAD TABLE — 107
- NETWORK LOAD TABLE — 108

20: LAN

- SERVER
  - LOAD MEASURING UNIT
  - 10 / 200
- SERVER
  - LOAD MEASURING UNIT
  - 11 / 201
- ...
- SERVER
  - LOAD MEASURING UNIT
  - 12 / 202

EP 2 060 977 A1

# Fig. 2

101: CONFIGURATION INFORMATION TABLE

| SYSTEM ID | HOST NAME | IPv4 ADDRESS | OS NAME | OS VERSION | CPU NAME | NO. OF CPUs |
|---|---|---|---|---|---|---|
| 0 | server0 | 192.168.10.10 | Linux® | 2.6.18 | Xeon® 3GHz | 1 |
| 1 | server1 | 192.168.10.11 | Linux® | 2.6.18 | Xeon® 3GHz | 2 |
| ⋮ | ⋮ | ⋮ | ⋮ | ⋮ | ⋮ | ⋮ |

# Fig. 3

106: CPU LOAD TABLE

| TIME | SYSTEM ID | CPU UTILIZATION (USER) (%) | CPU UTILIZATION (SYSTEM) (%) | CPU UTILIZATION (I/O WAIT) (%) | CPU UTILIZATION (IDLE) (%) |
|---|---|---|---|---|---|
| 12:00:00 | 0 | 10 | 20 | 5 | 65 |
| 12:00:00 | 1 | 5 | 5 | 3 | 87 |
| 12:00:10 | 0 | 15 | 23 | 1 | 61 |
| 12:00:10 | 1 | 3 | 3 | 2 | 92 |
| 12:00:20 | 0 | 12 | 22 | 1 | 65 |
| 12:00:20 | 1 | 2 | 6 | 5 | 87 |
| . . . | . . . | . . . | . . . | . . . | . . . |

# Fig. 4

107: DISK LOAD TABLE

| TIME | SYSTEM ID | DISK READING SPEED (KB/s) | NO. OF DISK READING REQUESTS (NO. OF TIMES/s) | DISK WRITING SPEED (KB/s) | NO. OF DISK WRITING REQUESTS (NO. OF TIMES/s) |
|---|---|---|---|---|---|
| 12:00:00 | 0 | 1123.12 | 21 | 516.11 | 13 |
| 12:00:00 | 1 | 1211.20 | 34 | 1112.04 | 56 |
| 12:00:10 | 0 | 2232.21 | 32 | 938.42 | 12 |
| 12:00:10 | 1 | 413.22 | 44 | 3360.22 | 65 |
| 12:00:20 | 0 | 525.98 | 51 | 373.80 | 32 |
| 12:00:30 | 1 | 2971.50 | 31 | 2370.34 | 23 |
| . . . | . . . | . . . | . . . | . . . | . . . |

EP 2 060 977 A1

# Fig. 5

EP 2 060 977 A1

108: NETWORK LOAD TABLE

| TIME | SYSTEM ID | NETWORK RECEIVING SPEED (KB/s) | NO. OF NETWORK RECEIVING REQUESTS (NO. OF TIMES/s) | NETWORK SENDING SPEED (KB/s) | NO. OF NETWORK SENDING REQUESTS (NO. OF TIMES/s) |
|---|---|---|---|---|---|
| 12:00:00 | 0 | 213.21 | 53 | 243.22 | 17 |
| 12:00:00 | 1 | 157.23 | 56 | 1121.71 | 37 |
| 12:00:10 | 0 | 432.42 | 42 | 212.43 | 17 |
| 12:00:10 | 1 | 222.22 | 32 | 412.24 | 41 |
| 12:00:20 | 0 | 331.80 | 82 | 512.92 | 253 |
| 12:00:30 | 1 | 672.34 | 89 | 212.30 | 34 |
| ⋮ | ⋮ | ⋮ | ⋮ | ⋮ | ⋮ |

# Fig. 6

EP 2 060 977 A1

103: DISK LOAD CONVERSION TABLE

| I/O NO. CONVERSION RATE | BAND CONVERSION RATE | CPU PERFORMANCE VALUE |
|---|---|---|
| 0.1 | 0.002 | 131 |

# Fig. 7

104: NETWORK LOAD CONVERSION TABLE

| I/O NO. CONVERSION RATE | BAND CONVERSION RATE | CPU PERFORMANCE VALUE |
|---|---|---|
| 0.2 | 0.005 | 131 |

EP 2 060 977 A1

# Fig. 8

EP 2 060 977 A1

105: CPU PERFORMANCE INFORMATION TABLE

| CPU NAME | CLOCK (GHz) | NO. OF CORES | NO. OF CHIPS | CPU PERFORMANCE VALUE |
|---|---|---|---|---|
| Xeon® 5160 | 3.0 | 2 | 1 | 17.5 |
| Itanium® 2 | 1.6 | 2 | 1 | 13.4 |
| Opteron™ 254 | 2.8 | 1 | 1 | 11.1 |
| . . . | . . . | . . . | . . . | . . . |

# Fig. 9

EP 2 060 977 A1

102: CPU OVERHEAD TABLE

| RATE OF NO. OF VIRTUAL MACHINES AND NO. OF PHYSICAL CPUs | CPU OVERHEAD COEFFICIENT |
|---|---|
| 0.5 | 1.01 |
| 1.0 | 1.02 |
| 1.5 | 2.02 |
| 2.0 | 3.51 |
| . . . | . . . |

# Fig. 10

30: COMPUTER
(VIRTUAL MACHINE SERVER SIZING APPARATUS)

911 — CPU

913 — ROM

914 — RAM

912: BUS

901 — DISPLAY

902 — K/B

903: MOUSE

915 — COMMUNICATION BOARD

904 — FDD

905 — CDD

906 — PRINTER

920

MAGNETIC DISK DRIVE

921 — OS

922 — WINDOW SYSTEM

923 — GROUP OF PROGRAMS

924 — GROUP OF FILES

EP 2 060 977 A1

# Fig. 11

```
                    ┌─────────────┐
                    │    START    │
                    └─────────────┘
                           │
                           ▼
INPUT CPU INFORMATION OF SERVERS $S_i$ ($i \in X_j$) TO BE          ⟍ S101
INTEGRATED AND INTEGRATING SERVER $S'_j$
                           │
                           ▼
CPU LOAD CALCULATING STEP:                                          ⟍ S102
CALCULATE CPU LOAD $P_{cpu,i}$
                           │
                           ▼
DISK LOAD CONVERTING STEP:                                         ⟍ S103
CALCULATE CPU LOAD $P_{disk\text{-}cpu,i}$ CONVERTED FROM
DISK LOAD
                           │
                           ▼
NETWORK LOAD CONVERTING STEP:                                      ⟍ S104
CALCULATE CPU LOAD $P_{net\text{-}cpu,i}$ CONVERTED FROM
NETWORK LOAD
                           │
                           ▼
CPU OVERHEAD CALCULATING STEP:                                     ⟍ S105
OBTAIN CPU OVERHEAD COEFFICIENT $\alpha_{cpu,j}$
                           │
                           ▼
LOAD ESTIMATING STEP:                                             ⟍ S106
CALCULATE CPU LOAD $P'_{cpu,j}$ AFTER INTEGRATION
                           │
                           ▼
                    ┌─────────────┐
                    │     END     │
                    └─────────────┘
```

# Fig. 12

$$\text{CPU LOAD CALCULATING STEP}$$

SELECT ONE SERVER $S_i$ TO BE INTEGRATED FROM
SET OF SERVERS $S_i$ ($i \in X_j$) TO BE INTEGRATED — S201

OBTAIN MAX VALUE $\rho_{cpu,\,i}$ OF CPU USE RATE
OF SERVER $S_i$ TO BE INTEGRATED FROM CPU LOAD TABLE — S202

OBTAIN CPU PERFORMANCE VALUE $\mu_i$ OF SERVER $S_i$ TO BE
INTEGRATED FROM CPU PERFORMANCE INFORMATION TABLE — S203

CALCULATE CPU LOAD $P_{cpu,\,i}$ FROM MAX VALUE $\rho_{cpu,\,i}$
OF CPU USE RATE AND CPU PERFORMANCE VALUE $\mu_i$ — S204

NO

HAVE ALL OF SERVERS $S_i$ ($i \in X_j$)
TO BE INTEGRATED BEEN PROCESSED?

YES

RETURN

# Fig. 13

DISK LOAD CONVERTING STEP

S301 — SELECT ONE SERVER $S_i$ TO BE INTEGRATED FROM SET OF SERVERS $S_i$ ($i \in X_j$) TO BE INTEGRATED

S302 — OBTAIN MAX VALUE $\rho_{disk\text{-}req,\ i}$ OF NO. OF DISK I/Os AND MAX VALUE $\rho_{disk\text{-}th,\ i}$ OF DISK BAND OF SERVER $S_i$ TO BE INTEGRATED FROM DISK LOAD TABLE

S303 — OBTAIN I/O NO. CONVERSION RATE $\beta_{disk\text{-}req}$, BAND CONVERSION RATE $\beta_{disk\text{-}th}$, AND CPU PERFORMANCE VALUE $\mu_{\beta disk}$ FROM DISK LOAD CONVERSION TABLE

S304 — CALCULATE CPU LOAD $P_{disk\text{-}cpu,\ i}$ FROM MAX VALUE $\rho_{disk\text{-}req,\ i}$ OF NO. OF DISK I/Os, MAX VALUE $\rho_{disk\text{-}th,\ i}$ OF DISK BAND, I/O NO. CONVERSION RATE $\beta_{disk\text{-}req}$, BAND CONVERSION RATE $\beta_{disk\text{-}th}$, AND CPU PERFORMANCE VALUE $\mu_{\beta disk}$

HAVE ALL OF SERVERS $S_i$ ($i \in X_j$) TO BE INTEGRATED BEEN PROCESSED?

NO

YES

RETURN

# Fig. 14

NETWORK LOAD CONVERTING STEP

SELECT ONE SERVER $S_i$ TO BE INTEGRATED FROM
SET OF SERVERS $S_i$ ($i \in X_j$) TO BE INTEGRATED — S401

OBTAIN MAX VALUE $\rho_{net\text{-}req, i}$ OF NO. OF NETWORK
I/Os AND MAX VALUE $\rho_{net\text{-}th, i}$ OF NETWORK BAND OF SERVER $S_i$
TO BE INTEGRATED FROM NETWORK LOAD TABLE — S402

OBTAIN I/O NO. CONVERSION RATE $\beta_{net\text{-}req}$,
BAND CONVERSION RATE $\beta_{net\text{-}th}$, AND CPU PERFORMANCE
VALUE $\mu_{\beta net}$ FROM NETWORK LOAD CONVERSION TABLE — S403

CALCULATE CPU LOAD $P_{net\text{-}cpu, i}$ FROM MAX VALUE $\rho_{net\text{-}req, i}$ OF
NO. OF NETWORK I/Os, MAX VALUE $\rho_{net\text{-}th, i}$ OF NETWORK BAND, I/O
NO. CONVERSION RATE $\beta_{net\text{-}req}$, BAND CONVERSION RATE
$\beta_{net\text{-}th}$, AND CPU PERFORMANCE VALUE $\mu_{\beta net}$ — S404

HAVE ALL OF SERVERS $S_i$ ($i \in X_j$)
TO BE INTEGRATED BEEN PROCESSED?

NO

YES

RETURN

EP 2 060 977 A1

# Fig. 15

103: DISK LOAD CONVERSION TABLE

| VIRTUALIZATION TECHNIQUE | I/O NO. CONVERSION RATE | BAND CONVERSION RATE | CPU PERFORMANCE VALUE |
|---|---|---|---|
| Xen™ | 0.1 | 0.002 | 131 |
| VMware® | 0.05 | 0.001 | 131 |
| ⋮ | ⋮ | ⋮ | ⋮ |

EP 2 060 977 A1

# Fig. 16

EP 2 060 977 A1

104: NETWORK LOAD CONVERSION TABLE

| VIRTUALIZATION TECHNIQUE | I/O NO. CONVERSION RATE | BAND CONVERSION RATE | CPU PERFORMANCE VALUE |
|---|---|---|---|
| Xen™ | 0.2 | 0.005 | 131 |
| VMware® | 0.10 | 0.002 | 131 |
| . . . | . . . | . . . | . . . |

# Fig. 17

102: CPU OVERHEAD TABLE

| VIRTUALIZATION TECHNIQUE | RATE OF NO. OF VIRTUAL MACHINES AND NO. OF PHYSICAL CPUs | CPU OVERHEAD COEFFICIENT |
|---|---|---|
| Xen™ | 0.5 | 1.01 |
| Xen™ | 1.0 | 1.02 |
| Xen™ | 1.5 | 2.02 |
| Xen™ | 2.0 | 3.51 |
| . . . | . . . | . . . |

EP 2 060 977 A1

**EP 2 060 977 A1**

Europäisches Patentamt
European Patent Office
Office européen des brevets

# EUROPEAN SEARCH REPORT

Application Number

EP 08 01 1725

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2007/048577 A (ACCENTURE GLOBAL SERVICES GMBH [CH]; SNYDER MARC E [US]; MELNICOFF RIC) 3 May 2007 (2007-05-03) * abstract * * paragraphs [0052] - [0069] * ----- | 1-11 | INV. G06F11/34 |
| A | HIDENORI UMENO ET AL: "Performance Evaluation on Server Consolidation Using Virtual Machines" SICE-ICCAS 2006 INTERNATIONAL JOINT CONFERENCE,, 1 October 2006 (2006-10-01), pages 2730-2734, XP031049867 ISBN: 978-89-950038-4-8 Section 1 and 2 * abstract * ----- | 1-11 | |
| A | L. CHERKASOVA, R. GARDNER: "Measuring CPU overhead for I/O processing in the Xen virtual machine monitor" USENIX ANNUAL TECHNICAL CONFERENCE 2005, April 2005 (2005-04), pages 387-390, XP002510484 * the whole document * ----- | 1-11 | |
| | | | TECHNICAL FIELDS SEARCHED (IPC) |
| | | | G06F |
| A | DIWAKER GUPTA ET AL: "Enforcing Performance Isolation Across Virtual Machines in Xen" MIDDLEWARE 2006 LECTURE NOTES IN COMPUTER SCIENCE;;LNCS, SPRINGER, BERLIN, DE, vol. 4290, 1 January 2006 (2006-01-01), pages 342-362, XP019051054 ISBN: 978-3-540-49023-4 * abstract * section 3 ----- -/-- | 1-11 | |

The present search report has been drawn up for all claims

| Place of search | Date of completion of the search | Examiner |
|---|---|---|
| Munich | 15 January 2009 | Schneider, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

36

Europäisches
Patentamt

European
Patent Office

Office européen
des brevets

## EUROPEAN SEARCH REPORT

Application Number

EP 08 01 1725

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | S. GOVINDAN, A. NATH, A. DAS, B. URGAONKAR, AND A. SIVASUBRAMANIAM: "Communication-aware CPU Management in Consolidated Virtualization-based Hosting Platforms" TECHNICAL REPORT, DEPARTMENT OF COMPUTER SCIENCE AND ENGINEERING, [Online] October 2006 (2006-10), pages 1-26, XP002510485 The Pennsylvania State University Retrieved from the Internet: URL:http://www.cse.psu.edu/~bhuvan/papers/ps/xen-and-co-tr.pdf> [retrieved on 2009-01-15] * abstract * section 4 ----- | 1-11 | |
| A,D | JP 2005 115653 A (NTT DATA CORP) 28 April 2005 (2005-04-28) * abstract * ----- | 1-11 | |
| | | | TECHNICAL FIELDS SEARCHED (IPC) |

The present search report has been drawn up for all claims

| Place of search | Date of completion of the search | Examiner |
|---|---|---|
| Munich | 15 January 2009 | Schneider, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

......................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 08 01 1725

This annex lists the patent family members relating to the patent documents cited in the above-mentioned European search report.
The members are as contained in the European Patent Office EDP file on
The European Patent Office is in no way liable for these particulars which are merely given for the purpose of information.

15-01-2009

| Patent document cited in search report | | Publication date | Patent family member(s) | | Publication date |
|---|---|---|---|---|---|
| WO 2007048577 | A | 03-05-2007 | CA | 2627073 A1 | 03-05-2007 |
| | | | EP | 1949317 A1 | 30-07-2008 |
| JP 2005115653 | A | 28-04-2005 | JP | 3861087 B2 | 20-12-2006 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005115653 A

**Non-patent literature cited in the description**

- **Y. AJIRO ; A. TANAKA.** Measuring Resource Management Overhead for Server Virtualization. *Research Report-System Evaluation, Information Processing Society of Japan,* June 2006, vol. 2006, 17-22